# EUROPEAN PATENT APPLICATION

(11) **EP 1 676 894 A1**
(43) Date of publication of application: **05.07.2006**
(21) Application number: 05018661.8
(22) Date of filing: 27.08.2005
(51) Int. Cl.: C09D 11/02

(54) **Ink, ink set, processing solution, recording method, recording medium, ink tank, and recording device**

(30) Priority: 28.12.2004 JP 2004381577; 26.01.2005 JP 2005018644; 26.01.2005 JP 2005018645; 26.01.2005 JP 2005018646
(71) Applicant: FUJI XEROX CO., LTD., Minato-ku, Tokyo (JP)
(72) Inventor: Takatsugu, Doi, Ebina-shi Kanagawa (JP)
(74) Representative: Fuhlendorf, Jörn

(57) **Abstract**

Provided is an ink at least containing a colorant and an ionic liquid, which is favorably used in the inkjet process. Also provided is an ink set consisting of the ink and/or a processing solution at least containing a flocculant. Also provided is a recording method and a recording device using the ink set, which apply the ink and the processing solution so that the ink and the processing solution contact each other and thus form an image on a recording medium. The ink may contain water and/or an organic solvent.

## Description

### BACKGROUND OF THE INVENTION

### Field of the Invention

The present invention relates to an ink, an ink set, a processing solution, a recording method, a recording medium, an ink tank, a recording device, a recording medium carrying an image recorded by using the ink, an ink ejection method, and an ink-ejecting device; and in particular, to an ink, an ink set, an processing solution, a recording method, an recording medium, an ink tank, a recording device, and others favorably used in ink-jet recording process.

### Description of the Related Art

Generally, both aqueous inks containing water as the principal solvent component and oil-based inks containing an organic solvent as the principal solvent component have been known as inks (Japanese Patent NO.3033069, Japanese Patent Application Laid-Open (JP-A) No. 09-176531, etc.). Water used as the solvent for the aqueous inks has a higher vapor pressure and vaporizes over time, and is thus known to cause problems such as solidification of the colorant in ink. Alternatively, the organic solvent used as an oil-based ink solvent also vaporizes, sometimes raising problems, from the viewpoint of VOC. Because the specific dielectric constant of organic solvents is generally lower than that of water, oil-based inks once statically electrified are less easily discharged.

As described above, the change in properties of the processing solution was inevitable in conventional methods, and as a result, there was no ink that retained a satisfactory ejection property after long-term storage.

On the other hand, Ink jet systems for ejecting ink from an ink ejection port formed of a nozzle, a slit or a porous film have been used in many printers due to their being small-sized and inexpensive. Of these ink jet systems, a piezo ink jet system for ejecting ink by utilizing the deformation of a piezoelectric unit and a thermal ink jet system for ejecting ink by utilizing the boiling phenomenon of an ink by way of thermal energy are excellent in a high resolution and a high-speed printing property. On the other hand, the diameter of the nozzles ejecting ink is smaller, and the ink ejecting property is influenced significantly by the liquid state of the ink.

In particular when used in the ink-jet process, where the diameter of the ink-ejecting nozzles is smaller, a change in the ink state often exerted a great influence on the ink ejecting property. Thus, if the ink is left as it is filled in the head for an extended period of time, problems such as nozzle clogging occur because of vaporization of water from the tips of nozzles, consequently leading to deterioration in image quality due to failure of ink ejection and improper ejection of ink in its direction.

As described above, there was no ink that is resistant to the change in ink properties during long-term storage and in particular retains its favorable ejection property even after long-term storage among the inks prepared by conventional methods.

To overcome the problem, known is a method of adding, for example, a hydrophilic organic solvent as a humectant to ink and thus increasing the stability of the colorant therein when the water content in ink is lowered (e.g., Japanese Patent No. 3033069).

Hydrophilic solvents can be grouped into high-boiling point solvents and low-boiling point solvents, by using the boiling point as an indicator. First, explained is the case where a high-boiling point organic solvent is used as the hydrophilic solvent. High-boiling point organic solvents are less volatile, higher in water-holding capacity, and thus effective in preventing vaporization of water and preserving the ejection property after long-term storage. However, high-boiling point solvents are more viscous and tend to increase ink viscosity, occasionally causing problems in ejection property especially when the ink is used in the inkjet process. Next, explained is the case where a low-boiling point organic solvent is used as the hydrophilic solvent. Low-boiling point solvents are less viscous and allow decrease in the ink viscosity. Thus, such a solvent causes fewer problems in the ejection property when the ink is used for printing especially in the inkjet process. On the other hand, low-boiling point solvents are higher in volatility, and thus, water as well as the low-boiling point solvent may vaporize and cause aggregation of the colorant when left for an extended period of time. In particular in the inkjet process where fine nozzles are used, the aggregation of the colorant and clogging thereby of nozzles lead to defects in image quality such as ejection failure and directional fault.

If an oil-based ink is used, the oil-based ink once statically electrified is less easily discharged. Especially when an oil-based ink is used as an ink-jet ink, the electric charge formed on the ink droplet may has an electrostatic interaction with the electric charge held on the recording medium or the electric charge held on the ink previously applied on the recording medium. An ink-jet ink droplet, which is smaller in quantity and thus has a smaller kinetic energy, is more vulnerable to the influence by external force. As a result, the ink-ejecting direction may be altered under the influence of electrostatic interactions, resulting in the problems of directional fault and others.

As described above, there was no ink that was kept at low viscosity for an extended period of time among the inks produced by conventional methods. Thus, there was no ink that had a favorable initial ejection property and a favorable ejection property after long-term storage at the same time. In addition, there was no ink prepared by the conventional method that is satisfactory in the accuracy of printed image position.

Accordingly, an object of the invention is to provide an ink that is resistant to the change in ink properties during long-term storage and superior especially in the ejection property after long-term storage, and an ink set, a recording method, an ink tank, a recording device, a recording medium carrying an image recorded by using the ink, an ink ejection method, and an ink-ejecting device using the same.

Another object of the invention is to provide an ink that retains stabilized ink properties even after storage for an extended period of time and as a result, has a favorable initial ejection property and a favorable ejection property after long-term storage, and an ink set, a recording method, an ink tank, a recording device, a recording medium carrying an image recorded by using the ink, an ink ejection method, and an ink-ejecting device using the same.

A third object of the invention is to provide a processing solution that is resistant to the change in properties during long-term storage and thus superior especially in the ejection property after long-term storage, and an ink set, a recording medium, a recording method, an ink tank, and, a recording device using the processing solution.

A fourth object of the invention is to provide an ink superior in the accuracy of printed image position, and an ink set, a recording method, an ink tank, a recording device, a recording medium carrying an image recorded by using the ink, an ink ejection method, and an ink-ejecting device using the same.

After intensive studies to solve the problems associated with the invention, the inventors have found that it was possible to prevent the change in ink properties during long-term storage and in particular to preserve the ejection property after long-term storage by using an ink satisfying the requirements in the invention described below.

The inventors have also found that it was possible to suppress the change in ink properties for an extended period of time and thus provide an ink with a favorable initial ejection property and a favorable ejection property after long-term storage at the same time, by using an ink satisfying the requirements in the invention described below.

After intensive studies to solve the problems associated with the invention, the inventors have found that it was possible to provide an ink with a favorable accuracy of printed image position by using an ink satisfying the requirements in the invention described below.

### SUMMARY OF THE INVENTION

In a first aspect of the present invention provides an ink comprising at lease a colorant and an ionic liquid, an ink set comprising the ink and a processing solution, a recording method using the ink or the ink set containing the ink, an ink tank, a recording device using the ink, a recording medium carrying an image recorded by using the ink, an ink ejection method, and an ink-ejecting device.

In a second aspect of the invention provides an ink comprising at least a colorant, an ionic liquid, and water, an ink set comprising the ink and a processing solution, a recording method using the ink or an ink set containing the ink, an ink tank, a recording device, a recording medium carrying an image recorded by using the ink, an ink ejection method, and an ink-ejecting device.

In a third aspect of the invention provides a processing solution comprising at least an ionic liquid for aggregating or thickening an ink comprising at least a colorant, an ink set comprising the processing solution and an ink, and a recording method, an ink tank, and a recording device using the ink set.

In a fourth aspect of the invention provides an ink comprising at least a colorant, an ionic liquid, and an organic solvent, an ink set comprising the ink and a processing solution, a recording method by using the ink or an ink set containing the ink, an ink tank, a recording device, a recording medium carrying an image recorded by using the ink, an ink ejection method, and an ink-ejecting device using the ink.

### BRIEF DESCRIPTION OF THE INVENTION

FIG. 1 is a perspective view illustrating the configuration of a favorable embodiment of the ink-jet recording device according to the present invention.
FIG. 2 is a perspective view illustrating the internal basic structure of the ink-jet recording device shown in FIG. 1.
FIG. 3 is a perspective view illustrating the appearance of another favorable embodiment of the ink-jet recording device according to the invention.
FIG. 4 is a perspective view illustrating the internal basic structure of the ink-jet recording device shown in FIG. 3.

### DETAILED DESCRIPTION OF THE INVENTION

Hereinafter, the present invention will be described in detail.

As is generally known, salts are solid at room temperature and melt only when heated to a temperature of several-hundred degrees. In contrast, recently found were so-called ionic liquids, salts in the particular combination of an organic cation and an anion that are liquid at room temperature. The size of ions and the electrostatic interaction among ions are considered to be involved in the reasons for an ionic liquid being liquid at around normal temperature. In addition, the ionic liquids characteristically have a low vapor pressure and are thus nonvolatile, incombustible, and flame resistant at the same time. Such properties seem to be the result of the restriction in ionic movement due to intermolecular electrostatic interactions.

First, requirements in ink properties will be described below. One of the requirements in ink properties is low viscosity, because low viscosity is needed for obtaining a uniform thin-layer image when an ink is applied on a recording medium. In particular, it is also important to give the ink a favorable ejection property when the ink is used by the inkjet process. Mainly two factors seem to be involved in the ink ejection property. One is the energy needed for ink ejection from a nozzle, which increases as the ink viscosity is raised, and thus, lower ink viscosity enables reduction in the energy needed for ink ejection. The second factor is the ink-supply period of supplying ink from an ink tank to a nozzle after ink ejection. In the inkjet process, ink is supplied by penetration of the ink into a capillary tube by capillarity, and lower ink viscosity seems to be effective in shortening the ink-supply period of supplying ink to the nozzle tip and improving the ink ejection property.

The ink according to the invention, which uses an ionic liquid as the ink solvent, is superior in particular in the ink ejection property and still retains its favorable ink property after long-term storage. The mechanism is yet to be clear, but seems as the followings: That is, the ionic liquid for use in the invention characteristically has a low vapor pressure and thus is less volatile. The low volatility seems to be effective in restricting vaporization of the ink solvent from nozzle face and preventing the change in ink composition and ink physical properties at the nozzle tip. Apparently for that reason, it became possible to eject ink consistently without ejection faults such as ejection failure and directional fault and without nozzle clogging even after storage for an extended period of time. In addition, the ionic liquid for use in the invention, which has a lower vapor pressure and is less volatile, also functions as a charge-transfer medium at the same time. Accordingly, even if electrically charged, the ink returns back to the electrically neutral state in a short period of time, because the electric charge is neutralized by the charge-transferring effect of the ionic liquid. Thus, even if the recording medium is electrically charged, no electrostatic repulsive force emerges between the ink and the recording medium, improving the accuracy of ejection position.

Further, addition of a nonvolatile ionic liquid to ink is likely to reduce the amount of the organic solvent vaporizing from the ink and thus the amount of VOCs emitted.

It is possible to adjust the viscosity of the ionic liquid for use in the invention, by properly selecting an organic cation and an anion used in combination. The control of viscosity is made possible by properly adjusting the sizes of the organic cation and the anionic molecule and the intermolecular interaction occurring between them. As described above, the ink, in particular that used in the inkjet process, is preferably less viscous, from the viewpoints of ejection energy and ink supply. Thus, the ink according to the invention, which is less viscous, is superior in initial ejection property.

When ink is left in the atmosphere, the solvent therein vaporizes, gradually changing the composition of the ink. In particular when the ink is an aqueous ink containing water as the principal component, vaporization of water causes problems such as increase in ink viscosity and aggregation of the colorants in the ink. Increase in ink viscosity leads to problems during formation of a thin-layer image. It also leads to problems in ink ejection property in the inkjet process and also of clogging of colorant agglomerates in the minute nozzle. The change in ink composition and physical properties during long-term storage has a great influence on the ejection property as described above, but the ionic liquid for use in the invention has a low vapor pressure and is less volatile. It is also possible to make an ionic liquid more compatible with water by properly selecting the organic cation and the anion used in combination. In this way, it became possible to prevent excessive water vaporization at the nozzle tip because the humectant does not vaporize and to improve the ejection property even after storage for an extended period of time.

It also became possible to satisfy the conflicting properties, initial ejection property and ejection property after long-term storage, at the same time.

Hereinafter, the invention will be described, taking the case where an image is formed on a recording medium of plain paper by using an aqueous ink Aqueous inks have water as the primary solvent; and, when applied on a paper, water often causes deformation, so-called curl and cockle, of paper by breaking the hydrogen bonds among the fibers in paper. As a result, the paper is not conveyed normally, occasionally causing so-called jamming, clogging of the paper in the conveyer system.

On the other hand, use of an ionic liquid as the ink solvent as in the invention makes the hydrogen bonds among cellulosic fibers more resistant to breaking, preventing irregular recombination of cellulosic fibers, and consequently, and thus, is effective in preventing the curl and cockle.

Hereinafter, the invention will be described in more detail.

In the first aspect of the invention, the ink comprises at least a colorant and an ionic liquid.

In the second aspect of the invention, the ink comprises at least a colorant, an ionic liquid, and water.

In the third aspect of the invention, the processing solution, which is effective in aggregating and thickening an ink at least comprising a colorant, comprises at least an ionic liquid.

In the fourth aspect of the invention, the ink comprises at least a colorant, an ionic liquid, and an organic solvent.

The colorant for use in the invention is not particularly limited, if it is a substance capable of forming an image with a colorant such as a dye, a pigment, or colored particles.

Water-soluble dyes, dispersion dyes, and oil-soluble dyes may be used in the present invention. Specific examples of the water-soluble dye include C.I. Direct Black-2, -4, -9, -11, -17, -19, -22, -32, -80, -151, -154, -168, -171, -194 and -195; C.I. Direct Blue-1, -2, -6, -8, -22, -34, -70, -71, -76, -78, -86, -112, -142, -165, -199, -200, -201, -202, -203, -207, -218, -236, -287 and -307; C.I. Direct Red-1, -2, -4, -8, -9, -11, -13, -15, -20, -28, -31, -33, -37, -39, -51, -59, -62, -63, -73, -75, -80, -81, -83, -87, -90, -94, -95, -99, -101, -110, -189 and 227; C.I. Direct Yellow-1, -2, -4, -8, -11, -12, -26, -27, -28, -33, -34, -41, -44, -48, -58, -86, -87, -88, -132, -135, -142, -144 and -173; C.I. Food Black-1 and -2; C.I. Acid Black-1, -2, -7, -16, -24, -26, -28, -31, -48, -52, -63, -107, -112, -118, -119, -121, -156, -172, -194 and -208; C.I. Acid Blue-1, -7, -9, -15, -22, -23, -27, -29, -40, -43, -55, -59, -62, -78, -80, -81, -83, -90, -102, -104, -111, -185, -249 and -254; C.I. Acid Red-1, -4, -8, -13, -14, -15, -18, -21, -26, -35, -37, -52, -110, -144, -180, -249, -257 and -289; and C.I. Acid Yellow-1, -3, -4, -7, -11, -12, -13, -14, -18, -19, -23, -25, -34, -38, -41, -42, -44, -53, -55, -61, -71, -76, -78, -79 and -122.

Specific examples of the dispersion dye include C.I. Disperse Yellow-3, -5, -7, -8, -42, -54, -64, -79, -82, -83, -93, -100, -119, -122, -126, -160, -184:1, -186, -198, -204 and 224; C.I. Disperse Orange-13, -29, -31:1, -33, -49, -54, -66, -73, -119 and -163; C.I. Disperse Red-1, -4, -11, -17, -19, -54, -60, -72, -73, -86, -92, -93, -126, -127, -135, -145, -154, -164, -167:1, -177, -181, -207, -239, -240, -258, -278, -283, -311, -343, -348, -356 and -362; C.I. Disperse Violet-33; C.I. Disperse Blue-14, -26, -56, -60, -73, -87, -128, -143, -154, -165, -165:1, -176, -183, -185, -201, -214, -224, -257, -287, -354, -365 and -368; and C.I. Disperse Green-6:1 and -9.

Specific examples of the oil soluble dyes include C.I. Solvent Yellow -2, -6, -14, -15, -16, -19, -21, -33, -56, -61, and -80; C.I. Solvent Orange -1, -2, -5, -6, -14, -37, -40, -44, and -45; C.I. Solvent Red -1, -3, -8, -23, -24, -25, -27, -30, -49, -81, -82, -83, -84, -100, -109, and 121; C.I. Solvent Blue -2, -11, -12, -25, -35, -36, -55, and -73; C.I. Solvent Black -3, -5, -7, -22, and -23; C.I. Acid Black -123; C.I. Solvent Violet -3, -8, -14, -21, and -27; C.I. Solvent Green -3; C.I. Solvent Brown -3, -5, -20, and -37; and the like.

Both an organic pigment and an inorganic pigment can be used for the pigment, and examples of a black pigment include a carbon black pigment such as furnace black, lamp black, acetylene black or channel black. It is also possible to use pigments having a black color and three primary colors of cyan, magenta and yellow, and furthermore, a pigment having a specific color such as red, green, blue, brown or white, a metallic luster pigment having a gold or silver color. For the invention, furthermore, it is also possible to use a pigment synthesized newly.

Specific examples of the pigment used in the present invention include Raven 7000, Raven 5750, Raven 5250, Raven 5000 Ultra II, Raven 3500, Raven 2000, Raven 1500, Raven 1250, Raven 1200, Raven 1190 ULTRA II, Raven 1170, Raven 1255, Raven 1080 and Raven 1060 (manufactured by Columbian Chemicals Company); Regal 400R, Regal 330R, Regal 660R, Mogul L, Black Pearls L, Monarch 700, Monarch 800, Monarch 880, Monarch 900, Monarch 1000, Monarch 1100, Monarch 1300 and Monarch 1400 (manufactured by Cabot Corporation): Color Black FW1, Color Black FW2, Color Black FW2V, Color Black 18, Color Black FW200, Color Black S150, Color Black S160, Color Black S 170, Printex 35, Printex U, Printex V, Printex 140U, Printex 140V, Special Black 6, Special Black 5, Special Black 4A and Special Black 4 (manufactured by manufactured by Degussa Co.): and No. 25, No. 33, No. 40, No. 47, No. 52, No. 900, No. 2300, MCF-88, MA 600, MA 7, MA 8 and MA 100 (manufactured by Mitsubishi Chemical Co., Ltd.). However, the pigments are not restricted thereto.

While examples of the cyan color include C.I. Pigment Blue-1, -2, -3, -15, -15:1, -15:2, -15:3, -15:4, -16, -22 and -60, the pigments are not restricted thereto.

While examples of the magenta color include C.I. Pigment Red-5, -7, -12, -48, -48:1, -57, -112, -122, -123, -146, -168, -184, -202, and C.I. Pigment Violet -19, the pigments are not restricted thereto.

While examples of the yellow color include Pigment Yellow-1, -2, -3, -12, -13, -14, -16, -17, -73, -74, -75, -83, 93, -95, -97, -98, -114, 128, -129, -138, -151, -154, -155 and -180, the pigments are not restricted thereto.

The self-dispersible pigment may be used in the present invention. The self-dispersible pigment in water used in the present invention refers to the pigment having many water-solubilizing groups on the surface of the pigment that is able to be stably dispersed in water without adding any polymer dispersant. The self-dispersible pigment in water is practically obtained by applying surface modification treatments such as an acid or a base treatment, a coupling agent treatment, a polymer graft treatment, a plasma treatment or a redox treatment on so-called usual pigments.

In addition to the surface-modified pigments described above, commercially available pigments such as Cab-o-jet-200, , Cab-o-jet-250, Cab-o-jet-260, Cab-o-jet-270, Cab-o-jet-300, IJX-444 and IJX -55 (manufactured by Cabot Corporation), and Microjet Black CW-1 and CW-2 (manufactured by Orient Chemical Industries, Ltd.) may also be used as the self-dispersible pigment in water.

The pigment coated with a resin may be used as the colorant. Such pigment is called as microcapsule pigments, which include commercially available microcapsule pigments manufactured by Dainippon Ink & Chemicals, Inc. and Toyo Ink MFG Co., Ltd. as well as microcapsule pigments prepared for use in the present invention.

It is also possible to use so-called colored particles prepared by dispersing a resin colored with a dye or pigment.

The ionic liquid dissolves salts and thus dyes more easily. Alternatively if a pigment or colored particles are used as the colorant, it is possible to disperse the colorant by properly adjusting the hydrophilic-hydrophobic balance of the surface of the pigment or colored particles, the kind of the surface functional group, and the balance in amount between the surface functional group and the ionic liquid. If a pigment is used as the colorant, the pigment is preferably a self-dispersing pigment, a pigment dispersed with a polymer dispersant, a microcapsule pigment, or the like.

The colorant for use in the invention is used in an amount in the range of 0.1 % by mass or more and 50 % by mass or less, preferably 1 % by mass or more and 10 % by mass or less, more preferably 1 % by mass or more and 20 % by mass or less, and particularly preferably 1 % by mass or more and 10 % by mass or less, with respect to the total ink weight. An ink colorant amount of less than 0.1 % by mass may result in insufficient optical density of the resulting image, while a colorant amount of more than 50 % by mass in instability in ink ejection property.

In the invention, a dispersant may be used for dispersing the colorant. The dispersant may be a nonionic, anionic, cationic, or ampholytic compound, or the like.

For example, copolymers of monomers having an α,β-ethylene unsaturated group can be taken. Examples of the monomer having the α,β-ethylene unsaturated group include ethylene, propylene, butene, pentene, hexene, vinyl acetate, aryl acetate, acrylic acid, methacrylic acid, crotonic acid, crotonic ester, acid itaconic acid, itaconic acid monoester, maleic acid, maleic acid monoester, maleic acid diester, fumaric acid, fumaric acid monoester, vinyl sulfonic acid, styrene sulfonic acid, vinyl naphthalene sulfonate, vinyl alcohol, acrylamide, methacryloxyethyl phosphate, bismethacryloxyethyl phosphate, methacryloxyethyl phenyl acid phosphate, ethylene glycol dimethacrylate, diethylene glycol dimethacrylate, a styrene derivative such as styrene, α-methylstyrene, vinyl toluene, vinyl cyclohexane, vinyl naphthalene, a vinyl naphthalene derivative, acrylic acid alkylester, phenyl acrylate, alkyl methacrylate, phenyl methacrylate, cycloalkyl methacrylate, alkyl crotonate, dialkyl itaconate, and dialkyl maleinate, and derivative thereof.

The polymers obtained by homopolymerization of the monomer having the ethylenic α,β-unsaturated group, or copolymers obtained by copolymerization of a plurality of the monomers having the ethylenic α,β-unsaturated groups can be used as the polymer dispersant. Specific examples thereof include styrene-alkyl maleate copolymer, styrene-alkyl methacrylate copolymer, styrene-alkyl acrylate copolymer, vinylnaphthalene-alkyl methacrylate copolymer, vinylnaphthalene-alkyl methacrylate copolymer, vinylnaphthalene-alkyl acrylate copolymer, alkyl acrylate-alkyl acrylate copolymer, alkyl methacrylate, styrene-phenyl maleate-alkyl methacrylate copolymer, styrene-cyclohexyl maleate-alkyl methacrylate copolymer, styrene-styrene sulfonate copolymer, styrene-maleic acid copolymer, styrene-methacrylic acid copolymer, styrene-acrylic acid copolymer, vinylnaphthalene-maleic acid copolymer, vinylnaphthalene-methacrylic acid copolymer, vinylnaphthalene-acrylic acid copolymer, alkyl acrylate-acrylic acid copolymer, alkyl methacrylate-methacrylic acid copolymer, styrene-alkyl methacrylate-methacrylic acid copolymer, styrene-alkyl acrylate-acrylic acid copolymer, styrene-phenyl methacrylate-methacrylic acid copolymer, and styrene-cyclohexyl methacrylate-methacrylic acid copolymer.

It is preferable that the dispersant to be used in the ink should have a weight-average molecular weight of 2,000 to 50,000. In some cases in which the molecular weight of the dispersant is less than 2,000, the pigment may not be dispersed stably. On the other hand, in some cases in which the molecular weight is more than 50,000, the viscosity of the liquid is increased so that a discharging property is deteriorated. A more preferable weight-average molecular weight is 3,500 to 20,000.

The dispersant to be added into the ink in the present invention is used within a range of 1 to 100% by mass. In some cases in which the amount of addition is more than 100% by mass, the viscosity of the liquid is increased so that the jet characteristic of the liquid becomes unstable. On the other hand, in some cases in which the amount of addition is less than 1% by mass, the dispersing stability of the pigment is deteriorated. For the amount of addition of the dispersant is more preferably equal to or more than2.5% by mass and equal to or less than 75% by mass, and is further preferably equal to or more than 5% by mass and equal to or less than 50% by mass.

It is preferable that the volume-average particle size of the particle of a colorant in the ink should be equal to or more than 30 nm and be equal to or less than 250 nm. The volume-average particle size of the particle of the colorant indicates the particle size of the colorant itself or the size of the particle of the colorant to which an additive such as a dispersant is stuck if any. In the invention, a microtrack UPA grading analyzer 9340 (manufactured by Leeds & Northrup Co., Ltd.) can be used as an apparatus for measuring the volume-average particle size. The measurement is carried out by putting 4 ml of ink in a measuring cell in accordance with a predetermined measuring method. For a parameter to be input in the measurement, the viscosity of ink is used for a viscosity and the density of a pigment is used for the density of a dispersed particle. The volume-average particle size is more preferably equal to or more than 60 nm and equal to or less than 250 nm and is further preferably equal to or more than 150 nm and equal to or less than 230 nm. In some cases in which the volume-average particle size of the particle in the liquid is less than 30 nm, an optical density is reduced. On the other hand, in some cases in which the same volume-average particle size is more than 250 nm, storage stability cannot be maintained.

The ionic liquid for use in the invention is a compound consisting of an organic cation and an anion and having a melting point of 20°C or less. Examples of the organic cations include imidazolium, pyridinium, piperidinium, quaternary ammonium, and phosphonium cations, and the like. The ionic liquid for use in the invention is preferably a compound consisting of an organic cation and an anion and having a melting point of 20°C or less.

The imidazolium salts are represented by the following Formula (1):

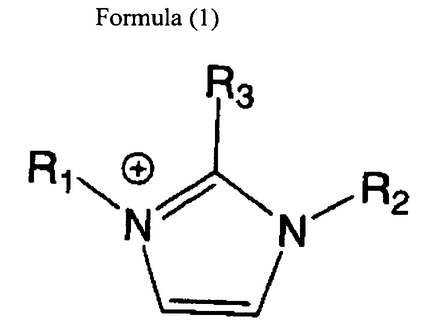

In Formula (1), R₁ to R₃ each represent a hydrogen atom, an alkyl group or an alkoxy group, wherein the alkyl or alkoxy group preferably has a carbon number of 1 to 20 and particularly preferably 1 to 8.

Specific examples thereof include 1-ethyl-3-methylimidazolium salt, 1-butyl-3-methylimidazolium salt, 1-hexyl-3-methylimidazolium salt, 1-octyl-3-methylimidazolium salt, 1-decyl-3-methylimidazolium salt, 1-dodecyl-3-methylimidazolium salt, 1-tetradecyl-3-methylimidazolium salt, 1-hexadecyl-3-methylimidazolium salt, 1-octadecyl-3-methylimidazolium salt, 1-ethyl-2,3-dimethylimidazolium salt, 1-butyl-2,3-dimethylimidazolium salt, 1-hexyl-2,3-dimethylimidazolium salt, and the like. Among them, 1-ethyl-3-methylimidazolium and 1-butyl-3-methylimidazolium salts are particularly preferable.

The pyridinium salts are represented by the following Formula (2):

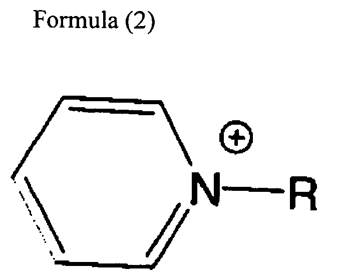

In Formula (2), R represents a hydrogen atom, an alkyl group or an alkoxy group, wherein the alkyl or alkoxy group preferably has a carbon number of 1 to 20 and particularly preferably 1 to 8.

Specific examples thereof include 1-ethylpyridinium salt, 1-butylpyridinium salt, 1-hexylpyridinium salt, and the like; and among them, 1-ethylpyridinium and 1-butylpyridinium salts are particularly preferable.

The quaternary ammonium salts are represented by the following Formula (3):

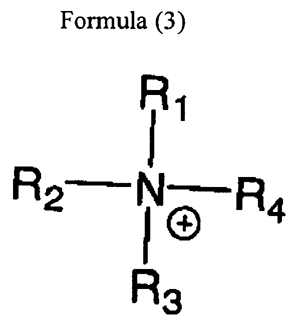

In Formula (3), R₁ to R₄ each represent a hydrogen, an alkyl group or an alkoxy group, wherein the alkyl or alkoxy group preferably has a carbon number of 1 to 20 and particularly preferably 1 to 8. Examples thereof include aliphatic quaternary ammonium salts and the like. Specific examples thereof include trimethylhexylammonium salt, N,N-diethyl-N-methyl-N-(2-methoxyethyl)ammonium salt, trimethylhexylammonium salt, trimethyloctylammonium salt, and the like; and among them, N,N-diethyl-N-methyl-N-(2-methoxyethyl)ammonium salts are particularly preferable.

The piperidinium salts represented by the following Formula 4 may also be used.

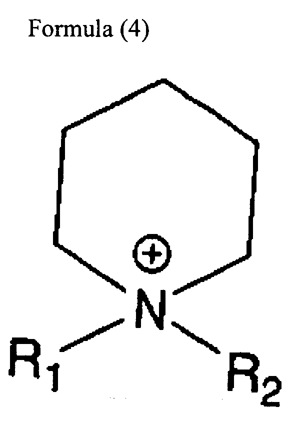

In Formula (4), R₁ and R₂ each represent a hydrogen or an alkyl group, wherein the alkyl group is an alkyl group preferably having 1 to20 carbon atoms and particularly preferably having 1 to 8 carbon atoms.

A Zwitterion-type ionic liquid having a carboxylic or sulfonic acid group on part of the alkyl groups in Formulae (1) to (4) may also be used.

In addition, an ionic liquid of a pyrrolinium, phenylindolium, alkylindolium, alkylcarbazolium, pyrazolium, or pyrolidinium salt may also be used.

The organic cation is preferably an imidazolium, pyridinium, or piperidinium cation, and the quaternary ammonium cation a compound having a longer alkyl chain length, because such a compound is easier in designing an ionic fluid having a lower melting point in suitable combination with an anion. Typical preferable examples thereof include 1-ethyl-3-methylimidazolium salt, 1-butyl-3-methylimidazolium salt, 1-hexyl-3-methylimidazolium salt, 1-octyl-3-methylimidazolium salt, 1-decyl-3-methylimidazolium salt, 1-dodecyl-3-methylimidazolium salt, 1-tetradecyl-3-methylimidazolium salt, 1-hexadecyl-3-methylimidazolium salt, 1-octadecyl-3-methylimidazolium salt, 1-butyl-2,3-dimethylimidazolium salt, 1-hexyl-2,3-dimethylimidazolium salt, 1-butylpyridinium salt, 1-hexylpyridinium salt, trimethyl octylammonium salt, piperidinium salt, and the like.

Alternatively, examples of favorable anions include bromide, chloride, lactate, hexafluorophosphate, tetrafluoroborate, bis(trifluoromethanesulfonyl)imide, trifluoromethanesulfonate, and the like.

The anion is preferably a bromide, chloride, lactate, hexafluorophosphate, bis(trifluoromethanesulfonyl)imide, or trifluoromethanesulfonate ion, and more preferably a bromide, chloride, or lactate ion, because it is possible to make the resulting ionic fluid have a lower melting point by designing the compound suitably taking into consideration the stability such as toxicity, solubility in water, and combination with the organic cation of the material.

Specific examples of the ionic liquids include 1-ethyl-3-methylimidazolium bromide, 1-ethyl-3-methylimidazolium chloride, 1-ethyl-3-methylimidazolium lactate, 1-ethyl-3-methylimidazolium hexafluorophosphate, 1-butyl-3-methylimidazolium chloride, 1-butyl-3-methylimidazolium bis(trifluoromethanesulfonyl)imide, 1-butyl-3-methylimidazolium hexafluorophosphate, 1-butyl-3-methylimidazolium tetrafluoroborate, 1-butyl-3-methylimidazolium trifluoromethanesulfonate, 1-butyl-3-methylimidazolium lactate, 1-hexyl-3-methylimidazolium bromide, 1-hexyl-3-methylimidazolium chloride, 1-hexyl-3-methylimidazolium hexafluorophosphate, 1-hexyl-3-methylimidazolium tetrafluoroborate, 1-hexyl-3-methylimidazolium trifluoromethanesulfonate, 1-octyl-3-methylimidazolium chloride, 1-octyl-3-methylimidazolium hexafluorophosphate, 1-decyl-3-methylimidazolium chloride, 1-dodecyl-3-methylimidazolium chloride, 1-hexadecyl-3-methylimidazolium chloride, 1-octadecyl-3-methylimidazolium chloride, 1-ethyl-2,3-dimethylimidazolium bromide, 1-ethyl-2,3-dimethylimidazolium chloride, 1-butyl-2,3-dimethylimidazolium chloride, 1-butyl-2,3-dimethylimidazolium bromide, 1-butyl-2,3-dimethylimidazolium tetrafluoroborate, 1-hexyl-2,3-dimethylimidazolium bromide, 1-hexyl-2,3-dimethylimidazolium chloride, 1-hexyl-2,3-dimethylimidazolium tetrafluoroborate, 1-hexyl-2,3-dimethylimidazolium trifluoromethanesulfonate, 1-ethylpyridinium bromide, 1-ethylpyridinium chloride, 1-butylpyridinium bromide, 1-butylpyridinium chloride, 1-butylpyridinium hexafluorophosphate, 1-butylpyridinium trifluoromethanesulfonate, 1-hexylpyridinium bromide, 1-hexylpyridinium chloride, 1-hexylpyridinium hexafluorophosphate, 1-hexylpyridinium tetrafluoroborate, 1-hexylpyridinium trifluoromethanesulfonate, N,N-diethyl-N-methyl-N-(2-methoxyethyl)ammonium tetrafluoroborate, N,N-diethyl-N-methyl-N-(2-methoxyethyl)ammonium bis(trifluoromethanesulfonyl)imide, trimethylhexylammonium bis(trifluoromethanesulfonyl)imide, trimethyloctylammonium bis(trifluoromethanesulfonyl)imide, trimethylpropylammonium bis(trifluoromethanesulfonyl)imide, 2-methyl-1-pyrrolinium hexafluoroborate, 1-ethyl-2-phenylindolium hexafluoroborate, 1,2-dimethylindolium hexafluoroborate, 1-ethylcarbazolium hexafluoroborate, 1-methylpyrazolium hexafluoroborate, 1-methyl pyrolidinium hexafluoroborate, and the like.

Further, the ionic liquid is preferably one of the following compounds, from the viewpoints of the stability of material, solubility in water, and affinity with organic solvent and for suppression of the change in ink physical properties during long-term storage. Such a compound is effective in securing the ink ejection property, because the ejection property has an influence on the ink viscosity particularly in the inkjet process. Typical preferable examples thereof include 1-ethyl-3-methylimidazolium bromide, 1-ethyl-3-methylimidazolium chloride, 1-ethyl-3-methylimidazolium lactate, 1-ethyl-3-methylimidazolium hexafluorophosphate, 1-butyl-3-methylimidazolium chloride, 1-butyl-3-methylimidazolium tetrafluoroborate, 1-butyl-3-methylimidazolium trifluoromethanesulfonate, 1-butyl-3-methylimidazolium lactate, 1-hexyl-3-methylimidazolium bromide, 1-hexyl-3-methylimidazolium chloride, 1-octyl-3-methylimidazolium chloride, 1-octyl-3-methylimidazolium hexafluorophosphate, 1-decyl-3-methylimidazolium chloride, 1-dodecyl-3-methylimidazolium chloride, 1-hexadecyl-3-methylimidazolium chloride, 1-octadecyl-3-methylimidazolium chloride, 1-ethyl-2,3-dimethylimidazolium bromide, 1-ethyl-2,3-dimethylimidazolium chloride, 1-butyl-2,3-dimethylimidazolium chloride, 1-butyl-2,3-dimethylimidazolium bromide, 1-hexyl-2,3-dimethylimidazolium bromide, 1-hexyl-2,3-dimethylimidazolium chloride, 1-ethylpyridinium bromide, 1-ethylpyridinium chloride, 1-butylpyridinium bromide, 1-butylpyridinium chloride, 1-hexylpyridinium bromide, 1-hexylpyridinium chloride, 1-ethyl-3-methylimidazolium lactate, 1-ethyl-3-methylimidazolium hexafluorophosphate, 1-butyl-3-methylimidazolium bis(trifluoromethanesulfonyl)imide, 1-butyl-3-methylimidazolium hexafluorophosphate, 1-butyl-3-methylimidazolium trifluoromethanesulfonate, 1-butyl-3-methylimidazolium lactate, 1-hexyl-3-methylimidazolium hexafluorophosphate, 1-hexyl-3-methylimidazolium trifluoromethanesulfonate, 1-octyl-3-methylimidazolium chloride, 1-octyl-3-methylimidazolium hexafluorophosphate, 1-decyl-3-methylimidazolium chloride, 1-dodecyl-3-methylimidazolium chloride, 1-hexadecyl-3-methylimidazolium chloride, 1-octadecyl-3-methylimidazolium chloride, 1-hexyl-2,3-dimethylimidazolium bromide, 1-hexyl-2,3-dimethylimidazolium chloride, 1-hexyl-2,3-dimethylimidazolium trifluoromethanesulfonate, 1-butylpyridinium bromide, 1-butylpyridinium chloride, 1-butylpyridinium hexafluorophosphate, 1-butylpyridinium trifluoromethanesulfonate, 1-hexylpyridinium bromide, 1-hexylpyridinium chloride, 1-hexylpyridinium hexafluorophosphate, 1-hexylpyridinium trifluoromethanesulfonate, N,N-diethyl-N-methyl-N-(2-methoxyethyl)ammonium bis(trifluoromethanesulfonyl)imide, trimethylhexylammonium bis(trifluoromethanesulfonyl)imide, trimethyl octylammonium bis(trifluoromethanesulfonyl)imide, and trimethylpropylammonium bis(trifluoromethanesulfonyl)imide.

In the invention, the ionic liquid is preferably a compound consisting of an organic cation and an anion and having a melting point of 25°C or less. Ionic compounds having a melting point of higher than 25°C occasionally resulted in solidification at lower temperature, prohibiting normal application of the ink onto a recording medium. More preferably, the ionic liquid has a melting point of 20°C or less and more preferably of 10°C or less.

In the invention, the ionic liquid preferably has a boiling point of 400°C or higher. The boiling temperature is more preferably 450°C or more and still more preferably 500°C or more. An ionic liquid having a boiling point of lower than 400°C may lead to deterioration in the ejection property of ink after long-term storage.

In the invention, the ionic liquid has a molecular weight of less than 1,000, more preferably less than 750, and still more preferably less than 500. An ionic liquid having a molecular weight of 1,000 or more may lead to increase in ink viscosity and thus, abnormal ejection of ink especially in the inkjet process ink.

In the invention, when the ink contains no water, the amount of the ionic liquid added is preferably 75 % by mass or more and less than 100%, more preferably, 80 % by mass or more and less than 100 % by mass, and still more preferably 85 % by mass or more and less than 100 % by mass, with respect to the total amount of the ink. An ionic liquid added in an amount of less than 75 % by mass occasionally resulted in deterioration in the ejection property of ink after long-term storage.

In the invention, if the ink contains water, the amount of the ionic liquid added is preferably 1 % by mass or more and less than 75 % by mass, more preferably 5 % by mass or more and less than 60 % by mass, and still more preferably 10 % by mass or more 30 % by mass, with respect to the total amount of the ink. An ionic liquid added in an amount of less than 1 % by mass may occasionally lead to deterioration in the ejection property of ink after long-term storage. Alternatively, an ionic liquid added in an amount of more than 75 % by mass may occasionally lead to elongation of the period of the ink being dried on the recording medium.

In the invention, if the ink contains water, the ionic liquid used preferably has a solubility of 5 g or more in 100 g of water. The solubility is more preferably 7.5 g or more and more preferably, 10 g or more. When the solubility in 100 g of water is less than 5 g, the ionic liquid and water may occasionally separate from each other, leading to maldistribution in colorant concentration of the ink and consequently causing the irregularity of printed images especially in the thickly painted image area.

In the invention, when the ink contains an organic solvent, the amount of the ionic liquid added is preferably 0.1 % by mass or more and less than 75 % by mass, more preferably 5 % by mass or more and less than 60 % by mass, and still more preferably 10 % by mass or more and less than 30 % by mass, with respect to the total amount of the ink. Addition of the ionic liquid in an amount of less than 0.1 % by mass may result in deterioration in the accuracy of printed image position, while addition in an amount of more than 75 % by mass in elongation of the drying period.

The ink and the processing solution according to the invention are preferably used as an ink-jet ink ejected by the inkjet process. In the inkjet process, increase in ink viscosity may result in abnormal ejection of the ink. It is possible to make the ink according to the invention have a viscosity suitable for ejection by the inkjet process, by adjusting the ionic liquid and the colorant. The suitable viscosity of the ink-jet ink or the inkjet processing solution is 1 mPa·s or more and less than 50 mPa·s, more preferably 1.2 mPa·s or more and 50 mPa·s or less, and still more preferably 1.5 mPa·s or more and 30 mPa·s or less. A viscosity of more than 50 mPa·s may result in abnormal ejection of the ink.

An organic solvent may be added to the ink, the processing solution, or the ink set according to the invention. Examples of the organic solvents include glycols, glycols derivatives, nitrogen-containing solvents, alcohols, sulfur-containing solvents, aliphatic hydrocarbons, aromatic hydrocarbons, ketones, esters, ethers, glycols, vegetable oils, and the like.

Specific examples of the solvents will be described below.

Specific examples of the glycols include ethylene glycol, diethylene glycol, propylene glycol, propanediol, butylene glycol, triethylene glycol, 1,5-pentanediol, hexanediol, 1,2,6-hexanetriol, glycerol, and the like.

Specific examples of the glycol derivatives include ethylene glycol monomethylether, ethylene glycol monoethylether, ethylene glycol monobutylether, diethylene glycol monomethylether, diethylene glycol monoethylether, diethylene glycol monobutylether, propylene glycol monobutylether, dipropylene glycol monobutylether, diglycerin-ethylene oxide adducts, and the like.

Specific examples of the nitrogen-containing solvent include pyrrolidone, N-methyl-2-pyrrolidone, cyclohexyl pyrrolidone, triethanol amine. Specific examples of the alcohols include methanol, ethanol, propanol, butanol, hexanol and benzyl alcohol. Specific examples of the sulfur-containing solvent include thiodiethanol, thiodiglycerol, sulfolane, and dimethyl sulfoxide.

Specific examples of the aliphatic hydrocarbons include n-hexane, cyclohexane, n-heptane, methylhexane, n-octane, methylheptane, dimethylhexane, nonane, decane, and the like. In addition, also included are paraffin solvents such as n-paraffin solvents, iso-paraffin solvents, cycloparaffin solvents.

Examples of the aromatic hydrocarbons include toluene, ethylbenzene, xylene, and the like.

Examples of the ketones include acetone, methylethylketone, pentanone, hexanone, heptanone, cyclohaxanone, and the like.

Examples of the esters include methyl acetate, ethyl acetate, vinyl acetate, ethyl propionate, ethyl butyrate, and the like.

Examples of the ethers include diethylether, ethylpropylether, ethylisopropylether, and the like.

Examples of the vegetable oils include drying oils, semi-drying oils, non-drying oils, and the like. Examples of the drying oils include perilla oil, flaxseed oil, china wood oil, poppy oil, walnut oil, safflower oil, sunflower oil, and the like; examples of the semi-drying oils include rape seed oil; and examples of the non-drying oils include palm oil.

In addition, propylene carbonate, ethylene carbonate, or the like may be also used.

Among the solvents described above, favorably used are alcohols such as propanol, butanol, and hexanol; glycols such as ethylene glycol, diethylene glycol, propylene glycol, propanediol, butylene glycol, triethylene glycol, 1,5-pentanediol, and hexanediol; and glycol derivatives such as ethylene glycol ethylether, diethylene glycol ethylether, and diethylene glycol butylether; and the like.

The organic solvents for use in the ink according to the invention may be used alone or in combination of two or more. The content of the water-soluble organic solvent is preferably 25 % by mass or less, more preferably 20 % by mass or less, and still more preferably 15 % by mass or less. A content of more than 25 % by mass may result in increase in the viscosity of the ink and deterioration in the ink ejection property.

In the invention, a surfactant may be added to the ink or the processing solution. The surfactant should be selected properly, considering the solubility thereof in the ionic liquid. Specific examples of the surfactants will be listed below, but are not limited thereto. In the invention, the ink contains a nonionic, anionic, or amphoteric surfactant, or the like. In addition, the ink may contain any combination of anionic, cationic, amphoteric, and nonionic surfactants, and additionally a dispersant.

Examples of the nonionic surfactants include polyethylene glycol-based and polyvalent alcohol-based surfactants, and the like. Examples of the polyethylene glycol-based surfactants include higher alcohol alkylene oxide adducts, alkylphenol alkylene oxide adducts, fatty acid alkylene oxide adducts, polyvalent alcohol fatty acid ester alkylene oxide adducts, fatty acid amide alkylene oxide adducts, polyalkylene glycol alkylene oxide adducts, and the like. Alternatively, examples of the polyvalent alcohol-based surfactants include glycerol fatty acid esters, polyvalent alcohol alkylethers, alkanolamine fatty acid amides, and the like.

Examples of the nonionic surfactant include polypropyleneglycol-ethylene oxide adduct, polyoxyethylene nonylphenyl ether, polyoxyethylene octylphenyl ether, polyoxyethylene dodecylphenyl ether, polyoxyethylene alkyl ether, polyoxyethylene fatty acid ester, sorbitan fatty acid ester, polyoxyethylene sorbitan fatty acid ester, fatty acid alkylolamide, acetyleneglycol, acetyleneglycol-oxyethylene adduct, aliphatic alkanolamide, glycerin ester and sorbitan ester.

Examples of the anionic surfactant available include carboxylate salt, sulfate ester salt, phoshate salt and the like. Examples of the anionic surfactant available include alkylbenzene sulfonate, alkylphenyl sulfonate, alkylnaphthalene sulfonate, higher fatty acid salts, sulfate ester salt of higher fatty acid esters, sulfonate salts of higher fatty acid esters, sulfate ester salts or sulfonate salts of higher alcohol ethers, higher alkyl sulfosuccinate, higher alkyl phosphate ester salts and phosphate ester salts of higher alcohol-ethylene oxide adducts. Examples of the effectively used anionic surfactant also include dialkylsulfo succinate, alkylsulfonate salt, dodecylbenzene sulfonate, alkylbenzene sulfonate, isopropylnaphthalene sulfonate, monobutylphenylphenol monosulfonate, monobutylbiphenyl sulfonate and dibutylphenylphenol disulfonate.

Examples of the amphoteric surfactants include carboxylate salt-base such as amino acid-base and betaine-base surfactants-base, sulfate esters-base, sulfonic acids-base, phosphoric esters-base, and the like. Other examples thereof include alanine-base, amidopropylbetaine-base, sulfobetaine-base, amidoamine oxide-base, and imidazoline-base surfactants; and specific examples thereof include alkylbetaines, sulfobetaines, sulfate betaines, imidazolidone betaines, amidopropylbetaines, aminodipropionate salts, and the like.

Examples of the cationic surfactant include tetraammonium alkyl salts, alkylamine salts, benzalkonium slats, alkyl pyridium salts and imidazolium salts, for example dihydroxyethyl stearylamine, 2-heptadecenyl-hydroxyethyl imidazoline, lauryldimethylbenzyl ammonium chloride, cetylpyridium chloride, and stearamide methylpyridium chloride.

Bio-surfactants such as spicrispolic acid, rhamnolipid and lysolecithin may be also used.

In the present invention, the surfactant may be used alone or in combination of two or more. For use, the amount of the surfactant to be added to the ink is preferably less than 10% by mass, is more preferably 0.01 to 5% by mass, and is further preferably 0.1 to 3% by mass. In some cases in which the amount of addition is equal to or more than 10% by mass, an optical density and the storage stability of the ink are deteriorated.

The colorant described above may be added to the processing solution. The colorant to be contained in the processing solution is preferably a dye, a pigment having a sulfonic acid or sulfonate salt group on the surface, or a self-dispersing pigment. It is because the colorant is resistant to aggregation even in the presence of a flocculant. The storage stability of processing solution is preserved if such a colorant is used. Compounds similar to those described above for ink pigment may be used as the dye, the pigment having a sulfonic acid or sulfonate salt group on the surface, or the self-dispersing pigment.

When a pigment is used in the processing solution, the volume-average particle diameter of the pigment particles is preferably 30 nm or more and 250 nm or less, more preferably 50 nm or more and 200 nm or less, and still more preferably 75 nm or more and 175 nm or less. Particles in the processing solution having a volume-average particle diameter of less than 30 nm may lead to decrease in optical density, while those having a particle diameter of more than 250 nm to disturbed dispersion stability of the pigment.

The processing solution aggregating the ink at least containing a colorant according to the invention is a solution that contains coarse particles of 5 µm or more in size in the liquid mixture prepared by mixing an ink and the processing solution at a mass ratio of 1:1 in the number 50 times or more greater than that of that in the original ink. The processing solution increasing the viscosity of the ink at least containing a colorant is a solution that increases the viscosity of the liquid mixture prepared by mixing an ink and the processing solution at a mass ratio of 1:1 to the extent twice or more higher than that of the original ink.
In the invention, the processing solution may be used in combination with the ink. In the processing solution, which functions to aggregate at least the components contained in the ink above, an organic acid, for example, having a pKa of 4.5 or less, an inorganic electrolyte, an organic amine salt, or the like is used as the flocculant.

Specific examples of the organic acids having a pKa of 4.5 or less for use in the invention include arginic acid, citric acid, glycine, glutamic acid, succinic acid, tartaric acid, cysteine, oxalic acid, fumaric acid, phthalic acid, maleic acid, malonic acid, lysine, malic acid, the compounds represented by following Formula (5), the derivatives of these compounds, and the like.

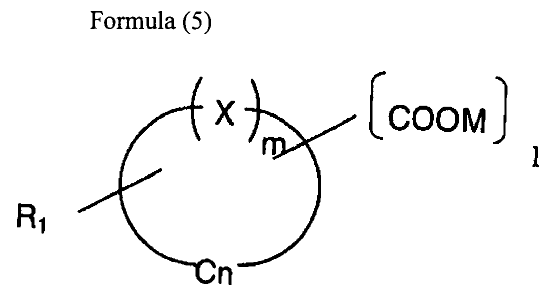

In Formula (5), R₁ represents an alkyl group; X represents O, CO, NH, NR₂ (R₂ represents an alkyl group), S, or SO₂; and M represents a hydrogen atom, an alkali metal, or an amine. 1 is an integer of 1 to 5; n is an integer of 3 to 7; and m is 1 or 2.

In Formula (5), X is preferably CO, NH, NR₂, or O and more preferably, CO, NH, or O. M is preferably, H, Li, Na, K, monoethanolamine, diethanolamine, triethanolamine, or the like, more preferably, H, Na, or K, and still more preferably a hydrogen atom. n is preferably a number giving a six- or five-membered heterocyclic ring, more preferably five-membered ring. The compound represented by Formula (5) may be a saturated or unsaturated cyclic compound if it is a heterocyclic compound. R₁ is preferably, CH₃, C₂H₅, or C₂H₄OH.

Examples of the compounds represented by Formula (5) include compounds having a furan, pyrrole, pyrroline, pyrrolidone, pyrone, pyrrole, thiophene, indole, pyridine, or quinoline structure and additionally a carboxyl group as the functional group. Specific examples thereof include 2-pyrrolidone-5-carboxylic acid, 4-methyl-4-pentanolide-3-carboxylic acid, furancarboxylic acid, 2-benzofurancarboxylic acid, 5-methyl-2-furancarboxylic acid, 2,5-dimethyl-3-furancarboxylic acid, 2,5-furan dicarboxylic acid, 4-butanolide-3-carboxylic acid, 3-hydroxy-4-pyrone-2,6-dicarboxylic acid, 2-pyrone-6-carboxylic acid, 4-pyrone-2-carboxylic acid, 5-hydroxy-4-pyrone-5-carboxylic acid, 4-pyrone-2,6-dicarboxylic acid, 3-hydroxy-4-pyrone-2,6-dicarboxylic acid, thiophenecarboxylic acid, 2-pyrrolecarboxylic acid, 2,3-dimethylpyrrole-4-carboxylic acid, 2,4,5-trimethylpyrrole-3-propionic acid, 3-hydroxy-2-indolecarboxylic acid, 2,5-dioxo-4-methyl-3-pyrroline-3-propionic acid, 2-pyrrolidinecarboxylic acid, 4-hydroxyproline, 1-methylpyrrolidine-2-carboxylic acid, 5-carboxy-1-methylpyrrolidine-2-acetic acid, 2-pyridinecarboxylic acid, 3-pyridinecarboxylic acid, 4-pyridinecarboxylic acid, pyridinedicarboxylic acid, pyridinetricarboxylic acids, pyridinepentacarboxylic acid, 1,2,5,6-tetrahydro-1-methylnicotinic acid, 2-quinolinecarboxylic acid, 4-quinolinecarboxylic acid, 2-phenyl-4-quinolinecarboxylic acid, 4-hydroxy-2-quinolinecarboxylic acid, 6-methoxy-4-quinolinecarboxylic acid, and the like.

The organic acid is preferably citric acid, glycine, glutamic acid, succinic acid, tartaric acid, phthalic acid, pyrrolidonecarboxylic acid, pyronecarboxylic acid, pyrrolecarboxylic acid, furancarboxylic acid, pyridinecarboxylic acid, coumarinic acid, thiophenecarboxylic acid, nicotinic acid, or a derivative or salt thereof ; more preferably, pyrrolidonecarboxylic acid, pyronecarboxylic acid, pyrrolecarboxylic acid, furancarboxylic acid, pyridinecarboxylic acid, coumarinic acid, thiophenecarboxylic acid, nicotinic acid, or a derivative or salt thereof; and more preferably, pyrrolidonecarboxylic acid, pyronecarboxylic acid, furancarboxylic acid, coumarinic acid, or a derivative or salt thereof.

The pKa of the organic acid is preferably 4.2 or less and more preferably 1.0 or more and 4.0 or less. Use of an organic acid having a pKa of more than 4.5 may occasionally result in decrease in the colorant aggregation force during ink mixing, insufficient optical density, and excessive ink penetration.

The inorganic electrolyte includes an alkali metal ion such as a lithium ion, a sodium ion, and a potassium ion; and polyvalent metal ion such as an aluminum ion, a barium ion, a calcium ion, a copper ion, an iron ion, a magnesium ion, a manganese ion, a nickel ion, a tin ion, a titanium ion and a zinc ion, organic hydrochloric acid, hydrobromic acid, hydriodic acid, sulfuric acid, nitric acid, phosphoric acid, thiocyanic acid, and organic carboxylic acid such as acetic acid, oxalic acid, lactic acid, fumaric acid, citric acid, salicylic acid and benzoic acid, and organic sulfonic acid salts.

Specific examples thereof include alkali metal salts such as lithium chloride, sodium chloride, potassium chloride, sodium bromide, potassium bromide, sodium iodide, potassium iodide, sodium sulfate, potassium nitrate, sodium acetate, potassium oxalate, sodium citrate, and potassium benzoate; and polyvalent metal salts such as aluminum chloride, aluminum bromide, aluminum sulfate, aluminum nitrate, aluminum sodium sulfate, aluminum potassium sulfate, aluminum acetate, barium chloride, barium bromide, barium iodide, barium oxide, barium nitrate, barium thiocyanate, calcium chloride, calcium bromide, calcium iodide, calcium nitrite, calcium nitrate, calcium dihydrogenphosphate, calcium thiocyanate, calcium benzoate, calcium acetate, calcium salicylate, calcium tartrate, calcium lactate, calcium fumarate, calcium citrate, copper chloride, copper bromide, copper sulfate, copper nitrate, copper acetate, iron chloride, iron bromide, ion iodide, iron sulfate, iron nitride, iron oxalate, iron lactate, iron fumarate, iron citrate, magnesium chloride, magnesium bromide, magnesium iodide, magnesium sulfate, magnesium nitrate, magnesium acetate, magnesium lactate, manganese chloride, manganese sulfate, manganese nitrate, manganese dihydrogenphosphate, manganese acetate, manganese salicylate, manganese benzoate, manganese lactate, nickel chloride, nickel bromide, nickel sulfate, nickel nitrate, nickel acetate, tin sulfate, titanium chloride, zinc chloride, zinc bromide, zinc sulfate, zinc nitrate, zinc thiocyanate, and zinc acetate.

The polyvalent metallic salt is still preferably, since the polyvalent metallic salt produces a great effect of flocculating the component in the ink.

The organic amine compound may be a primary, secondary, tertiary, quaternary amine, or a salt thereof. Specific examples of the amine compounds include tetraalkylammonium salts, alkylamines, benzalkonium salts, alkylpyridinium salts, imidazolium salts, polyamine, and the derivatives and salts thereof, and the like. More specific examples thereof include amylamine, butylamine, propanolamine, propylamine, ethanolamine, ethylethanolamine, 2-ethylhexylamine, ethylmethylamine, ethylbenzylamine, ethylenediamine, octylamine, oleylamine, cyclooctylamine, cyclobutylamine, cyclopropylamine, cyclohexylamine, diisopropanolamine, diethanolamine, diethylamine, di-2-ethylhexylamine, diethylenetriamine, diphenylamine, dibutylamine, dipropylamine, dihexylamine, dipentylamine, 3-(dimethylamino)propylamine, dimethylethylamine, dimethylethylenediamine, dimethyl octylamine, 1,3-dimethylbutylamine, dimethyl-1,3-propanediamine, dimethylhexylamine, aminobutanol, aminopropanol, aminopropanediol, N-acetylaminoethanol, 2-(2-aminoethylamino)ethanol, 2-amino-2-ethyl-1,3-propanediol, 2-(2-aminoethoxy)ethanol, 2-(3,4-dimethoxyphenyl)ethylamine, cetylamine, triisopropanolamine, triisopentylamine, triethanolamine, trioctylamine, tritylamine, bis(2-aminoethyl)-1,3-propanediamine, bis(3-aminopropyl)ethylenediamine, bis(3-aminopropyl)-1,3-propanediamine, bis(3-aminopropyl)methylamine, bis(2-ethylhexyl)amine, bis(trimethylsilyl)amine, butylamine, butylisopropylamine, propanediamine, propyldiamine, hexylamine, pentylamine, 2-methyl-cyclohexylamine, methyl-propylamine, methylbenzylamine, monoethanolamine, laurylamine, nonylamine, trimethylamine, triethylamine, dimethylpropylamine, propylenediamine, hexamethylenediamine, tetraethylenepentamine, diethylethanolamine, tetramethylammonium chloride, tetraethylammonium bromide, dihydroxyethylstearylamine, 2-heptadecenyl-hydroxyethylimidazoline, lauryldimethylbenzylammonium chloride, cetylpyridinium chloride, stearamidomethylpyridium chloride, diallyldimethylammonium chloride polymer, diallylamine polymer, monoallylamine polymers, and the like.

Favorable amine compounds include cetylpyridinium chloride, stearamidomethylpyridium chloride, diallyldimethylammonium chloride polymer, diallylamine polymer, monoallylamine polymer, and the like. In addition, amine compounds having a molecular weight of 500 or more may also be used favorably.

In the invention, the flocculants such as the organic compounds having a pKa of 4.5 or less, the inorganic electrolytes, and the organic amine compounds above may be used alone or in combination of two or more. The pKa of the organic acids is 4.5 or less, preferably 4.2 or less, and more preferably 1.0 or more and 4.0 or less. Use of a flocculant having a pKa of more than 4.5 may result in decrease in the colorant aggregation force during ink mixing, insufficient optical density, and excessive ink penetration. The amount of the flocculant added to the liquid according to the invention is in the range of 0.01 to 30 % by mass, preferably, 0.1 to 20 % by mass, and more preferably 0.1 to 15 % by mass, with respect to the total amount of the processing solution. When the amount of the flocculant added to the processing solution is less than 0.01 % by mass, the pigment may not be aggregated sufficiently during ink contact, resulting in insufficient improvement in optical density, ink bleeding, and intercolor ink bleeding, while an addition amount of more than 30 % by mass may lead to deterioration in the ejection property after long-term storage.

In the invention, use of an ink set consisting of the ink described above and the processing solution at least containing a flocculant enables improvement in image qualities such as optical density and bleeding. It is presumably because mixing of the ink and the processing solution on a recording medium leads to favorable aggregation of the colorant in the ink. It seems that it is possible to raise the optical density of printed image by increasing the colorant concentration on the recording medium, and resulting hindered diffusion of the colorant with the ink prevents ink bleeding.

In the invention, an organic acid having a pKa of 4.5 or less, an inorganic electrolyte, an organic amine compounds, or the like is preferable as the flocculant. Seemingly, when an ink is mixed with a processing solution, the flocculant, which is compatible with the ink medium (ionic liquid) and capable of aggregating the colorant, can aggregate the colorant in ink effectively.

The processing solution may contain an ionic liquid, an organic solvent, or, water in a similar manner to the ink above. The content of the ionic liquid or the organic solvent is 1 % by mass or more and 95 % by mass or less, preferably 1 % by mass or more and 60 % by mass or less, and more preferably 5 % by mass or more and 50 % by mass or less. The water-soluble organic solvent added in an amount of less than 1 % by mass in the liquid may result in insufficient optical density, while that added in an amount of more than 95 % by mass may lead to increase in the viscosity of the liquid, making the initial ejection property unstable.

When the processing solution contains water, the total amount of the ionic liquid, the organic solvent, and water in ink is 1 % by mass or more and 99 % by mass or less, preferably 30 % by mass or more and 97 % by mass or less, and still more preferably 50 % by mass or more and 95 % by mass or less in the entire ink. An ink solvent amount of less than 1 % by mass or more than 99 % by mass may make the ejection property unstable.

The processing solution may contain a surfactant similar to the ink above. The amount of the surfactant added is preferably less than 10 % by mass, more preferably in the range of 0.01 to 5 % by mass, and still more preferably 0.01 to 3 % by mass, with respect to the entire ink. An addition amount of 10 % by mass or more may lead to deterioration in optical density and in the storage stability of pigment ink and processing solution.

The processing solution may also contain a colorant. The colorant to be added to the processing solution is preferably a dye, a pigment having a sulfonic acid or sulfonate salt group on the surface, or a self-dispersing pigment. It is because these colorants are resistant to aggregation even in the presence of a flocculant. Use of such a colorant is effective in preserving the storage stability of processing solution. The dyes, pigments having a sulfonic acid or sulfonate salt group on the surface, and self-dispersing pigments described as the pigments for the ink may be used.

When a pigment is used in the processing solution, the volume-average particle diameter of the pigment particles is preferably 30 nm or more and 250 nm or less, more preferably 50 nm or more and 200 nm or less, still more preferably 75 nm or more and 175 nm or less. Particles in the liquid having a volume-average particle diameter of less than 30 nm may lead to decrease in optical density, while those having a particle diameter of more than 250 nm to disturbed dispersion stability of the pigment.

The ratio of the number of coarse 5 µm or more particles in the liquid mixture prepared by mixing an ink and a processing the solution at a mass ratio of 1:1 to the number of the coarse 5 µm or more particles in ink is preferably 100 or more and 500,000 or less and more preferably, 250 or more and 100,000. In addition, the number of the coarse 5 µm or more particles in the liquid mixture of the original ink and the processing solution is preferably 1,000 piece/µL or more and 5,000,000 piece/µL or less, more preferably 2,500 piece/µL or more and 1,000,000 piece/µL or less, and still more preferably 5,000 piece/µL or more and 500,000 piece/µL or less. On the other hand, the ratio of the viscosity of the liquid prepared by mixing an ink and a processing solution at a mass ratio of 1:1 to that of the original ink is preferably 2 or more and 100 or less and more preferably 2.5 or more and 50 or less.

When the ratio of the number of coarse 5 µm or more particles in the liquid mixture prepared by mixing an ink and a processing the solution at a mass ratio of 1:1 to the number of the coarse 5 µm or more particles in the original ink is less than 50, or when the ratio of the viscosity of the liquid prepared by mixing an ink and a processing solution at a mass ratio of 1:1 to that of the original ink is less than 2, the optical density of printed image declined occasionally. On the contrary, excessively higher aggregation or viscosity-increasing force leads to restriction of the ejected ink width and occasionally generation of the white lines in printed image and the like.

The number of the coarse 5 µm or more particles in the ink-jet ink and processing solution liquid mixture is preferably 1,000 piece/µL or more and 5,000,000 piece/µL or less, more preferably 2,500 piece/µL or more and 1,000,000 piece/µL or less, and still more preferably 5,000mr µL or more and 500,000 piece/µL or less. When the number of the coarse 5 µm or more particles in the ink-jet ink and processing solution liquid mixture is less than 1,000 piece/µL, the optical density declined occasionally. When the number of the coarse 5 µm or more particles is more than 5,000,000 piece/µL, aggregation force become too intensive, reducing the spread of the ink, consequently generation of the white lines and decrease in optical density in some cases.

The number of the coarse particles having the size of 5µm or more in the mixed solution of the ink and the processing solution measured by mixing the two liquids in a mass ratio of 1 : 1 and taking 2µL while stirring them by means of Accusizer TM770 Optical Particle Sizer (manufactured by Particle Sizing Systems Co., Ltd.). The density of a pigment is input to be the density of a dispersed particle as a parameter in the measurement. Pigment powder acquired by heating and drying a pigment dispersing solution is measured by means of a specific gravity meter or a specific gravity bottle so that the density of the pigment can be obtained.

In addition, may be added any one of the additives including polyethyleneimine, polyamines, polyvinylpyrrolidone, polyethylene glycol, ethylcellulose, cellulose derivatives such as carboxymethylcellulose, polysaccharides and the derivatives thereof, others water-soluble polymers, acrylic polymer emulsions, polyurethane emulsions, polymer emulsions such as hydrophilic latex, hydrophilic polymer gels, cyclodextrin, macrocyclic amines, dendrimers, crown ethers, urea and the derivatives thereof, acetamide, silicone surfactants, fluorochemical surfactants, water, alkali metal compounds such as potassium hydroxide, sodium hydroxide, and lithium hydroxide; nitrogen-containing compounds such as ammonium hydroxide; triethanolamine, diethanolamine, ethanolamine, and 2-amino-2-methyl-1-propanol; alkali-earth metal compounds such as calcium hydroxide; acids such as sulfuric acid, hydrochloric acid, and nitric acid; salts of a strong acid and a weak alkali such as ammonium sulfate; buffer agents, antioxidants, fungicides, viscosity adjusters, conductive agents, ultraviolet absorbents, and the like.

### (Ink-jet recording medium)

Use of the ink, the ink tank, the recording method, and the recording device according to the invention provides a favorable pattern or image having fewer image defects due to clogging.

### (Ink-jet ink tank)

For example, the ink tank described in JP-A No. 2001-138541 and others may be used as the ink-jet ink tank according to the invention. Such an ink case is effective in preventing the change in ink properties in an ink tank during long-term storage and preserving the ejection property of the ink from a recording head during long-term storage sufficiently when ink is filled in the ink tank and ejected from the recording head.

### (Ink Jet Recording Method and Ink Jet Recording device)

An ink jet recording method according to the invention serves to carry out printing so as to cause the ink-jet ink and the processing solution to come in contact with each other by using an ink set for ink jet according to the invention. Moreover, an ink jet recording device according to the invention comprises recording heads as an ink-ejector for ejecting the ink, to a recording medium, liquids in the ink set for ink jet according to the invention. These can apply a recording device provided with a heater for controlling the drying of an ink or a recording device provided with an intermediate transfer mechanism and serving to print a recording material on an intermediate member and then carrying out a transfer onto a recording medium such as a paper in addition to an ordinary ink jet recording device.

It is preferable that the ink jet recording method (device) according to the invention should employ a thermal ink jet recording system or a piezo ink jet recording system in respect of an effect of improving a blur and an intercolor blur. The cause is not apparent. Although an ink is heated during an ejection so that a viscosity is reduced in case of the thermal ink jet recording system, the temperature of the ink is dropped over a recording medium so that the viscosity is suddenly increased. Therefore, it can be supposed that there is an effect of improving a blur and an intercolor blur. On the other hand, in case of the piezo ink jet system, a liquid having a high viscosity can be ejected. It is possible to suppress the spread of the liquid having a high viscosity over the recording medium in the direction of the surface of the paper. Consequently, it is guessed that there is an effect of improving the blur and the intercolor blur.

In the ink jet recording method (device) according to the invention, it is preferable that a mass ratio of the amount of application of the ink to the amount of application of the processing solution which is required for forming one pixel should be 1 : 20 to 20 : 1. The mass ratio is more preferably 1 : 10 to 10 : 1 and is further preferably 1 : 5 to 5 : 1. In some cases in which the amount of application of the ink is much smaller or larger than the amount of application of the second ink, the flocculation becomes insufficient so that the optical density is reduced, the blur is caused more seriously and the intercolor blur is deteriorated. The pixel implies a lattice point constituted when a desirable image is divided at a minimum distance where the ink can be applied in a scanning direction and a sub-scanning direction. By giving a proper ink set to each pixel, a color and an image density can be regulated and an image is thus formed.

The ink-jet ink and the processing solution are ejected on a recording medium as they are brought into contact with each other, and the mutual contact between the ink-jet ink and the processing solution causes aggregation of the ink by the action of the flocculant, provides an image superior in color development and optical density and prevented from irregularity in painted area and bleeding and intercolor bleeding, and shortens the drying period. The ink and the processing solution may be ejected either close to each other or overlapped, if they become in contact with each other.

They are applied on the recording medium in the order of processing solution and ink-jet ink. Prior application of the processing solution enables more effective aggregation of the components in the ink-jet ink. The ink-jet ink may be applied anytime after application of the processing solution. Preferably, the ink is applied within 0.5 second after application of the processing solution.

In the ink jet recording method (device) according to the invention, it is preferable that both the ink-jet ink and the processing solution should have a mass per drop of equal to or more than 0.5 ng and equal to or less than 25 ng. The mass is more preferably equal to or more than 0.5 ng and equal to or less than 20 ng and is further preferably equal to or more than 0.5 ng and equal to or less than 15 ng. In some cases in which the mass per drop is more than 25 ng, a blur is caused more seriously. The reason is as follows. It can be supposed that the contact angles of the ink-jet ink and the processing solution with the recording medium are changed depending on the amount of a drop and the drop tends to spread in the direction of the surface of the paper when the amount of the drop is increased. A liquid droplet in an amount of less than 0.01 ng is sometimes accompanied with deterioration in ejection stability.

However, in an inkjet device that ejects multiple droplets different in volume from a nozzle, the amount of droplet above means the minimum amount of droplet allowing printing of an image.

In the invention, it is also possible to use a recording device that has means of heating at least part of the ink tank and/or the ink applicator. The method is effective, for example, in heating an ink containing an ionic liquid having a melting point of 25°C to a temperature of the melting point or more and ejecting the heated ink on a recording medium. In particular when an inkjet process is used as the ink applicator, increase in ink viscosity occasionally causes a problem of deterioration in ejection property. Although a method of reducing the ink viscosity under heat and ejecting the resulting ink onto a recording medium is known, most of commonly-used ink solvents vaporize more readily by heating, often resulting in problems in ejection properties such as clogging. When an ionic liquid is used as the ink solvent as in the invention, the ionic liquid having a lower vapor pressure does not vaporize even when heated at high temperature, causing no problems in the ejection property even after storage for an extended period of time.

Alternatively, it is also possible to use a recording device having a difference in the voltages applied to the ink applicator and the recording medium in the invention. It is because presence of a difference between the voltages applied to the ink applicator and the recording medium improves the flying velocity and the direction of the ejected ink droplet under the influence of electric field. Use of an ionic liquid, which is more sensitive to the electric field, as the ink solvent as in the invention is effective in improving both the flying velocity and direction of the ejected ink droplet.

In the invention, it is possible to use a recording device having means of removing at least part of the ink applied on a recording medium. Common inks are dried and fixed on the recording medium by vaporization of the ink solvent therein into atmosphere. Use of an ionic liquid as the ink solvent as in the invention, the ionic liquid, which is less volatile, is characteristically resistant to drying and fixation and remains on the recording medium. Thus, it is possible to accelerate drying and fixing of the ink, with the means of removing at least part of the ink from the recording medium. The ink may be removed, for example, by applying an electric field to the recording medium or bringing water or an organic solvent into contact with the recording medium.

The decomposition products of the ionic liquid coated on recording medium may be further coated for solidification or fixation, or the ionic liquid on the recording medium may be recovered by aspiration.

A preferred embodiment of the ink jet recording device according to the invention will be described below in detail with reference to the drawings. In the drawings, members having substantially the same functions have the same reference numerals and repetitive description will be omitted.

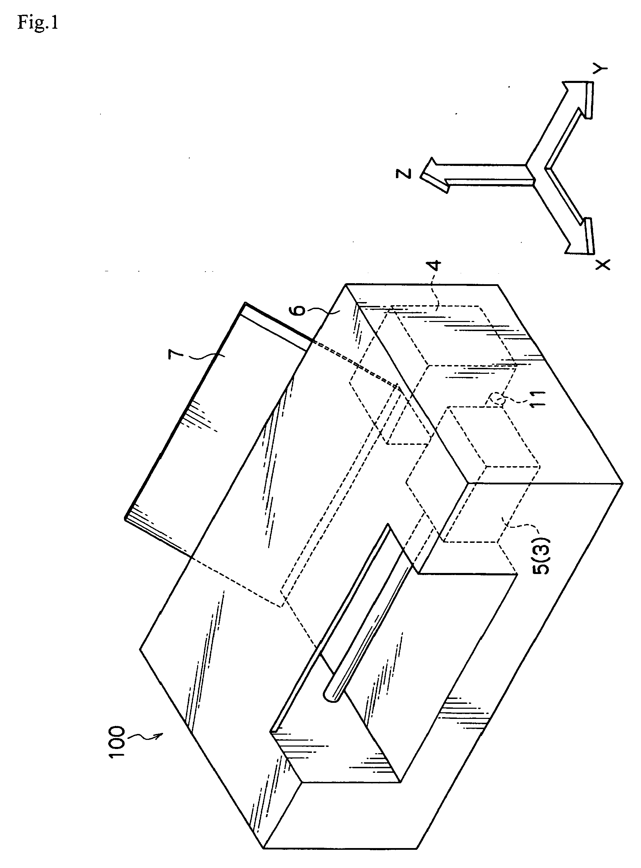

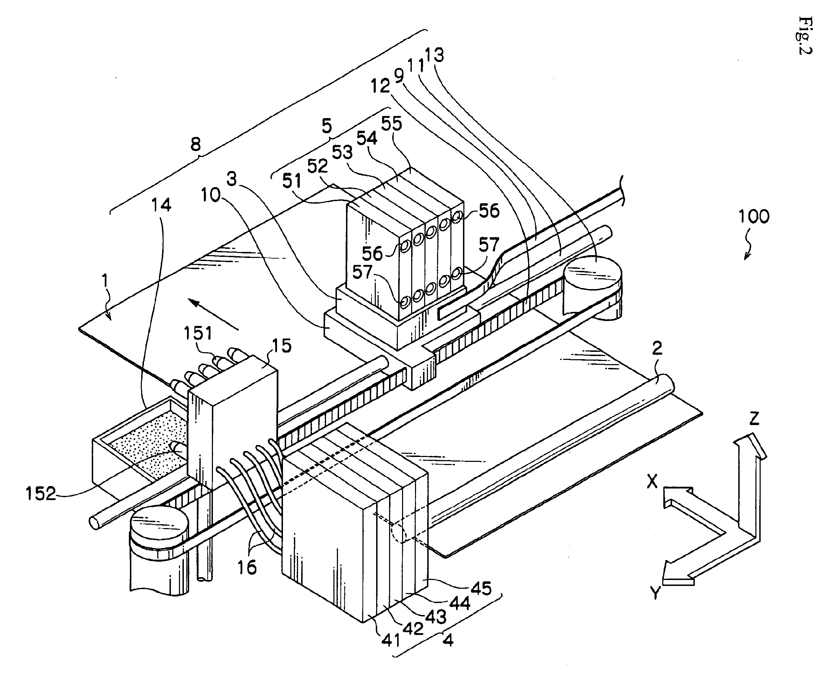

Fig. 1 is a perspective view illustrating the configuration of a favorable embodiment of the ink-jet recording device according to the present invention. Fig. 2 is a perspective view illustrating the internal basic structure of the ink-jet recording device (which will be hereinafter referred to as an image forming device) in Fig. 1. An image forming device 100 according to the embodiment has such a structure as to be operated to form an image based on the ink jet recording method according to the invention. More specifically, as shown in Figs. 1 and 2, the image forming device 100 is mainly constituted by an external cover 6, a tray 7 capable of mounting a recording medium 1 such as a plain paper in a predetermined amount, a delivery roller (delivery means) 2 for delivering the recording medium 1 every sheet into the image forming device 100 and an image forming portion 8 (image forming means) for ejecting an ink and a liquid composition to the surface of the recording medium 1, thereby forming an image.

The delivery roller 2 is a paper feeding mechanism constituted by a pair of rollers provided rotatably in the image forming device 100, and serves to interpose the recording medium 1 set to the tray 7 and to deliver the recording medium 1 in a predetermined amount into the device 100 every sheet in a predetermined timing.

The image forming portion 8 forms an image with an ink over the surface of the recording medium 1. The image forming portion 8 is mainly constituted by a recording head 3, an ink tank 5, a feeding signal cable 9, a carriage 10, a guide rod 11, a timing belt 12, a driving pulley 13, and a maintenance unit 14.

The ink tank 5 has ink tanks 51, 52, 53, 54 and 55 which store inks or liquid compositions having different colors from each other so as to be ejected. These accommodate a black ink (K), a yellow ink (Y), a magenta ink (M) and a cyan ink (C) as a first liquid and a treating solution as a processing solution, for example. Of course, it is not necessary to provide an ink tank for the treating solution separately when the processing solution contains a coloring material.

Each of the sub-ink tanks 5 has an exhaust hole 56 and a refill hole 57. When the recording head 3 reaches stand-by position (or refill position), exhaust pins 151 and refill pins 152 of the refill device 15 are fixed respectively to the exhaust holes 56 and refill holes 57 of the sub-ink tank, and thus the sub-ink tank 5 and the refill device 15 are connected. The refill device 15 is connected to a main ink tank 4 via refill tubes 16, and the ink or the processing solution is supplied by the refill device 15 from the main ink tank 4 through refill holes 57 into the sub-ink tank 5.

The main ink tank 4 also has main ink tanks 41, 42, 43, 44, and 45, respectively containing inks different in color and a processing solution. For example, black ink (K), yellow ink (Y), magenta ink (M), and cyan ink (C) are stored as the first liquid and a processing solution as the second liquid therein, and each main ink tank is stored in the image-forming device 100 in the detachable state.

As shown in Fig. 2, furthermore, the feeding signal cable 9 and the ink tank 5 are connected to the recording head 3. When external image recording information is input from the feeding signal cable 9 to the recording head 3, the recording head 3 sucks an ink in a predetermined amount from each of the ink tanks and ejects the same ink onto the surface of the recording medium based on the image recording information. The feeding signal cable 9 also plays a part in the supply of a necessary power for driving the recording head 3 to the recording head 3 in addition to the image recording information.

Moreover, the recording head 3 is provided and held on the carriage 10, and the guide rod 11 and the timing belt 12 connected to the driving pulley 13 are connected to the carriage 10. By such a structure, the recording head 3 can also be moved in a direction Y (a scanning direction) which is parallel with the surface of the recording medium 1 and is perpendicular to a delivery direction X (a sub-scanning direction) of the recording medium 1 along the guide rod 11.

The image forming device 100 comprises control device (not shown) for regulating the driving timing of the recording head 3 and the driving timing of the carriage 10 based on image recording information. Consequently, it is possible to continuously form an image based on the image recording information in a predetermined region over the surface of the recording medium 1 to be delivered at a predetermined speed in the delivery direction X.

The maintenance unit 14 is connected to a pressure reducing device (not shown) through a tube. Furthermore, the maintenance unit 14 is connected to the nozzle portion of the recording head 3 and has the function of setting the inside of the nozzle of the recording head 3 into a pressure reducing state, thereby sucking an ink from the nozzle of the recording head 3. By providing the maintenance unit 14, it is possible to remove an excessive ink stuck to the nozzle during the operation of the image forming device 100 if necessary or to suppress the evaporation of the ink from the nozzle in an operation stop state.

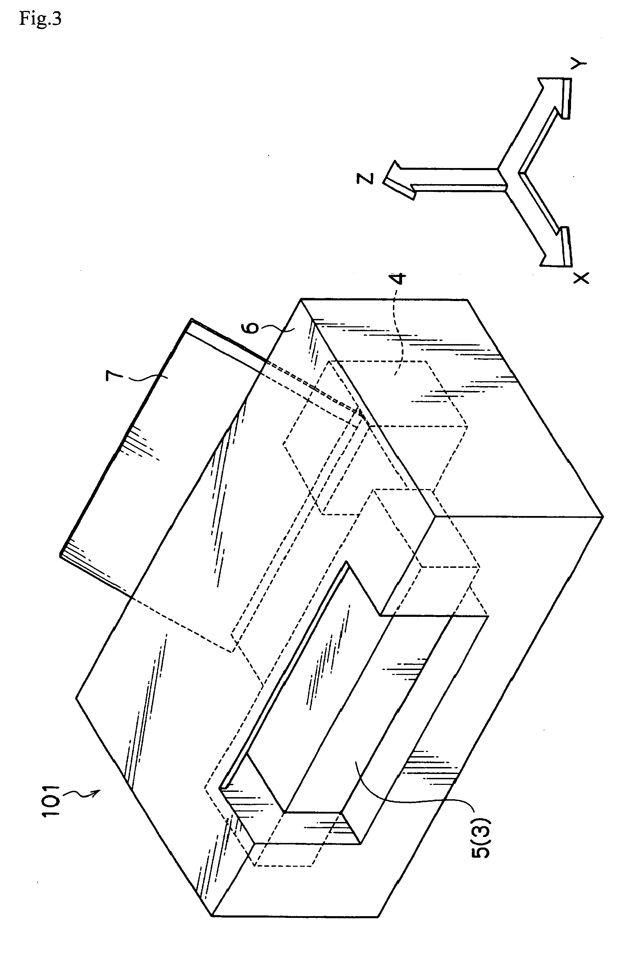

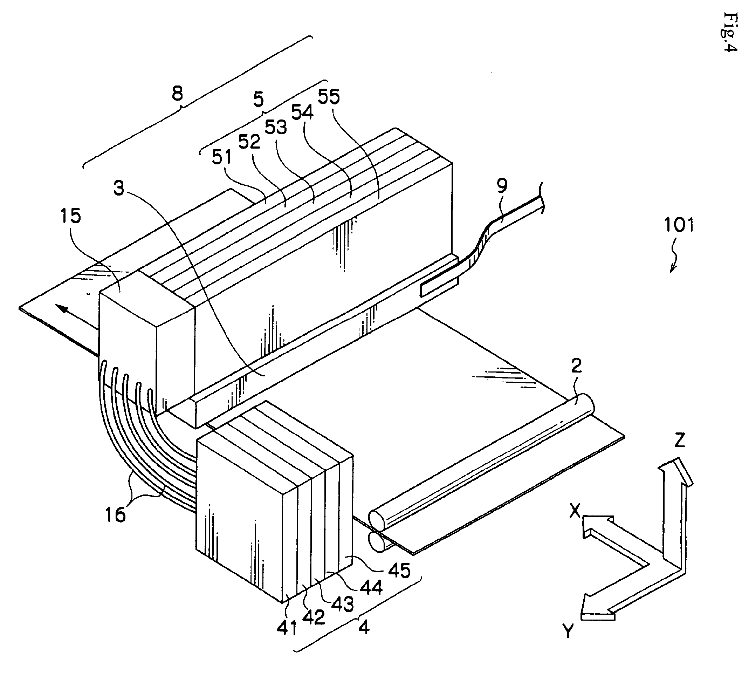

Fig. 3 is a perspective view illustrating the appearance of another favorable embodiment of the ink-jet recording device according to the invention. Fig. 4 is a perspective view illustrating the internal basic structure of the ink-jet recording device (which will be hereinafter referred to as an image forming device) in Fig. 3. An image forming device 101 according to the embodiment has such a structure as to be operated to form an image based on the ink jet recording method according to the invention.

The image forming device 101 shown in Figs. 3 and 4 includes a recording head 3 having a width which is equal to or greater than the width of a recording medium 1, does not include a carriage mechanism, and is constituted by a paper feeding mechanism (which is a delivery roller 2 in the embodiment but may be a paper feeding mechanism of a belt type, for example) in a sub-scanning direction (the delivery direction of the recording medium 1 : the direction of an arrow X). The recording head 3 sequentially arranges ink tanks 51 to 55 in the sub-scanning direction (the delivery direction of the recording medium 1 : the direction of the arrow X) and similarly arranges a nozzle group for ejecting each color (including a treating solution) in the sub-scanning direction, which is not shown. Since other structures are the same as those of the image forming device 100 shown in Figs. 1 and 2, description will be omitted. In the FIG., the sub-ink tank 5 is always connected to the refill device 15 because the recording head 3 does not move, but may be connected to the refill device 15 only when the ink is refilled.

The image forming device 101 shown in Figs. 3 and 4 collectively carries out printing in the transverse direction (scanning direction) of the recording medium 1 by the recording head 3. Therefore, the structure of the device can be more simplified and a printing speed is more increased than a type having a carriage mechanism.

The ink, ink set, ink tank, recording medium, recording method, and recording device according to the invention can be used in forming an image on ink-penetrating papers such as plain paper as well as on non-ink-penetrating media such as art paper and plastic and metal film. Thus, they may be used in various fields, for example, of printing, electric wiring board, display devices such as color filter, liquid crystal display, and organic EL display, medical film recording, DNA information recording, and construction materials such as wall paper and decorative board.

The ink according to the invention is most effective in the ink-jet recording process, but is also applicable in other printing methods such as offset printing, gravure printing, flexographic printing, and screen printing, in addition to the ink-jet recording process.

### EXAMPLES

Hereinafter, the present invention will be described in more detail with reference to Examples, but it should be understood that the invention is not restricted by these Examples.

### <Ink preparation method 1 A>

A mixture of 100 g of a pigment and 500 g of ion-exchange water is ultrasonicated by using the ultrasonic homogenizer. After centrifugation by using the centrifugal separator by using the centrifugal separator, the supernatant liquid is removed. The operation is repeated three times, and the resulting pigment is dried under reduced pressure.

Ion-exchange water and the pigment dispersant are added to a pigment concentration of 15 % by mass in the initial pigment dispersion, and the dispersion is adjusted to pH 7.5 with an aqueous sodium hydroxide solution. The pigment dispersion is ultrasonicated by using the ultrasonic homogenizer for further dispersion of the pigment. The dispersion is centrifuged in a centrifugal separator (8,000 rpm×30 min), and the sediment (20% with respect to the total amount) is removed, to give a pigment dispersion.

The pigment dispersion is weighed and mixed with a predetermined amount of an ionic liquid, to give a dispersion containing the pigment at a desirable concentration. Water in the liquid mixture obtained is removed under reduced pressure while the mixture is stirred. Others additives are added to the ink thus obtained, and the mixture is filtered through a 5 µm filter, to give a desirable liquid.

### <Ink preparation method 2A>

A mixture of 100 g of a pigment and 500 g of ion-exchange water is ultrasonicated by using the ultrasonic homogenizer. After centrifugation by using the centrifugal separator, the supernatant liquid is removed. The operation is repeated three times, and the resulting pigment is dried under reduced pressure.

100 g of the pigment thus obtained is added to a heated aqueous sulfanilic acid solution while the solution is stirred. The mixture is allowed to cool to room temperature while stirred, and 14 g of conc. nitric acid is added thereto. 10 g of an aqueous NaNO₂ solution is added to the solution, and the mixture is stirred until the reaction completes. The pigment is then desalted. Ion-exchange water is added to the surface-treated pigment thus obtained to a pigment concentration of 12 % by mass, and the solution is adjusted to pH 7.5 and dispersed in an ultrasonic homogenizer. The dispersion is centrifuged in a centrifugal separator (8,000 rpmx30 min), and the sediment (20% with respect to the total amount) is removed, to give a pigment dispersion.

The pigment dispersion is weighed and mixed with a predetermined amount of ionic liquid, to give a dispersion containing the pigment at a desirable concentration. Water in the liquid mixture obtained is removed under reduced pressure while the mixture is stirred. Others additives are added to the ink thus obtained, and the mixture is filtered through a 5 µm filter, to give a desirable liquid.

### <Ink preparation method 3A>

A colorant and other additives are dissolved in a solvent and the mixture is stirred. The liquid obtained is filtered through a 5 µm filter, to give a desired liquid.

### (Ink A-1)

An ink is prepared according to the ink preparation method 1A.
- Composition-
- Mogul L (manufactured by Cabot): 4 % by mass
- Styrene-acrylic acid-sodium acrylate copolymer: 1 % by mass
- 1-Ethyl-3-methylimidazolium bis(trifluoromethanesulfonyl)imide (molecular weight: 391, melting point: -16°C): 94 % by mass
- Acetylene glycol ethylene oxide adduct: 1 % by mass

### (Ink B-1)

An ink is prepared according to the ink preparation method 2A.
- Composition-
- C.I. Pigment Blue 15:3: 4 % by mass
- N,N-diethyl-N-methyl-N-(2-methoxyethyl)ammonium bis(trifluoromethanesulfonyl)imide (molecular weight: 426, melting point: 25°C or less): 95 % by mass
- Acetylene glycol ethylene oxide adduct: 1 % by mass

### (Ink C-1)

An ink is prepared according to the ink preparation method 1 A.
- Composition-
- C.I. Pigment Red 122: 5 % by mass
- Styrene-acrylic acid-sodium acrylate copolymer: 1 % by mass
- 1-Ethyl-3-methylimidazolium tetrafluoroborate (molecular weight: 198, melting point: 6°C): 93 % by mass
- Acetylene glycol ethylene oxide adduct: 1 % by mass

### (Ink D-1)

An ink is prepared according to the ink preparation method 1 A.
- Composition-
- C.I. Pigment Yellow 128: 4 % by mass
- Styrene-acrylic acid-sodium acrylate copolymer: 1 % by mass
- 1-Butylpyridinium chloride (molecular weight: 172, melting point: 25°C or less): 94 % by mass
- Acetylene glycol ethylene oxide adduct: 1 % by mass

### (Ink E-1)

An ink is prepared according to the ink preparation method 1A.
- Composition-
- C.I. Pigment Yellow 74: 4 % by mass
- Styrene-acrylic acid-sodium acrylate copolymer: 1 % by mass
- MP-200 (manufactured by TREKSTAR) (molecular weight: 422, melting point: 11°C): 95 % by mass [0124]

### (Ink F-1)

An ink is prepared according to the ink preparation method 3A.
- Composition-
- C.I. Direct Blue 199: 4 % by mass
- N,N-diethyl-N-methyl-N-(2-methoxyethyl)ammonium bis(trifluoromethanesulfonyl)imide (molecular weight: 426, melting point: 25°C or less): 77.5 % by mass
- Diglycerin ethylene oxide adduct: 17.5 % by mass
- Polyoxyalkylene stearylether: 1 % by mass

### (Ink G-1)

An ink is prepared according to the ink preparation method 2A.
- Composition-
- C.I. Pigment Red 122: 4 % by mass
- Trimethyl-hexylammonium bis(trifluoromethanesulfonyl)imide (molecular weight: 424, melting point: 34.5): 85 % by mass
- Diglycerin ethylene oxide adduct: 10 % by mass
- Polyoxyalkylene stearylether: 1 % by mass

### (Ink H-1)

An ink is prepared according to the ink preparation method 2A.
- Composition-
- C.I. Pigment Red 122: 4 % by mass
- 1-Octadecyl-3-methylimidazolium bis(trifluoromethanesulfonyl)imide (molecular weight: 616, melting point: 25°C or less): 80 % by mass
- Diglycerin ethylene oxide adduct: 15 % by mass
- Polyoxyalkylene stearylether: 1 % by mass

### (Ink I-1)

An ink is prepared according to the ink preparation method 3A.
- Composition-
- Cabojet 300: 4 % by mass
- Ethylene glycol: 30 % by mass
- Acetylene glycol ethylene oxide adduct: 1 % by mass
- Water: 65 % by mass

### (Ink J-1)

An ink is prepared according to the ink preparation method 3A.
- Composition-
- C.I. Direct Blue 199: 4 % by mass
- Isopropyl alcohol: 75 % by mass
- Acetylene glycol ethylene oxide adduct: 1 % by mass
- Water: 20 % by mass

### (Processing solutionA-1)

- Composition-
- Diethylene glycol: 10 % by mass
- 2-Furancarboxylic acid (pKa= 2.4): 8 % by mass
- Sodium hydroxide: 0.8 % by mass
- Diglycerin ethylene oxide adduct: 8 % by mass
- Acetylene glycol ethylene oxide adduct: 1 % by mass
- Ion-exchange water: balance

### (Processing solution B-1)

- Composition-
- Diethylene glycol: 15 % by mass
- Manganese nitrate hexahydrate: 10 % by mass
- Acetylene glycol ethylene oxide adduct: 1 % by mass
- Ion-exchange water: balance

### (Processing solution C-1)

- Composition-
- Diethylene glycol: 10 % by mass
- Polyallylamine: 12 % by mass
- Acetylene glycol ethylene oxide adduct: 1 % by mass
- Ion-exchange water: balance

The melting point of the ionic liquid is regarded as 25°C or less, if it is liquid when stored at 25°C. In addition, the melting point known, for example, shown in material physical data sheet, is used as it is, if it is available.

### (Examples 1A to 11A and Comparative Examples 1A to 2A)

By using each of the ink sets shown in Tables 1 and 2, an image is formed with a 600-dpi, 1024-nozzle prototype printer head (droplet amount: 14 ng) on a FX-C² paper (manufactured by Fuji Xerox). In Examples 1A to 8A and Comparative Examples 1A and 2A, only ink is ejected on the recording medium. On the other hand, in Examples 9A to 11A, both an ink and a processing solution are ejected onto the recording medium so that the ink and the processing solution contact each other, forming an image. Printing is performed while the ink applicator is heated to 50°C under normal environment (temperature: 23±0.5°C, humidity: 55±5% R.H). When both the ink and the processing solution are ejected, the ratio of the ink to the processing solution for forming an image of one pixel is 1:0.2 by mass.

### «Ejection property after long-term storage»

For evaluation of the ejection property after long-term storage, an ink is filled in an ink-jet recording device and left without a cap under normal environment for 15 days. Then, a nozzle-check pattern is printed, and the number of nozzles ejecting ink is counted.

### -Evaluation criteria-

a: Ejection from all nozzles
b: Ejection from 90% or more nozzles
c: Ejection from 80% or more and less than 90% nozzles
d: Ejection from less than 80% nozzles

### «Curl»

An image of 100%-coverage pattern is printed on a A4-sized plain paper and the printed sample is left for one week. Deformation at the terminal of the plain paper after storage is determined.

### -Evaluation criteria-

a: Deformation of 5 mm or smaller
b: Deformation of 10 mm or smaller
c: Deformation of 20 mm or smaller
d: Deformation of larger than 20 mm

### <<Cockle>>

An image of 100%-coverage pattern is printed and the height of the cockle immediately after printing is determined with a laser displacement gage.

### -Evaluation criteria-

a: Displacement of 0.5 mm or smaller
b: Displacement amount of 1.0 mm or smaller
c: Displacement amount of 1.5 mm or smaller
d: Displacement amount of larger than 1.5 mm

### <Evaluation results>

Evaluation results are summarized in Tables 1A to 4A.

**Table 1A**

| | Ink | Ionic liquid | | |
|---|---|---|---|---|
| | | Melting point | Molecular weight | Addition amount |
| Example 1A | A-1 | -16°C | 391 | 94 |
| Example 2A | B-1 | ≤25°C | 426 | 95 |
| Example 3A | C-1 | 6°C | 198 | 93 |
| Example 4A | D-1 | ≤25°C | 172 | 94 |
| Example 5A | E-1 | 11°C | 422 | 95 |
| Example 6A | F-1 | ≤25°C | 426 | 77.5 |
| Example 7A | G-1 | 34.5°C | 424 | 85 |
| Example 8A | H-1 | ≤25°C | 616 | 80 |
| Comparative Example 1A | I-1 | - | - | 0 |
| Comparative Example 2A | J-1 | - | - | 0 |

**Table 2A**

| | Ink | Ejection property after long-term storage | Curl | Cockle |
|---|---|---|---|---|
| Example 1A | A-1 | a | a | a |
| Example 2A | B-1 | a | a | a |
| Example 3A | C-1 | a | a | a |
| Example 4A | D-1 | a | a | a |
| Example 5A | E-1 | b | a | a |
| Example 6A | F-1 | b | a | a |
| Example 7A | G-1 | b | a | a |
| Example 8A | H-1 | b | a | a |
| Comparative Example 1A | I-1 | c | c | c |
| Comparative Example 2A | J | d | b | b |

**Table 3A**

| | Ink | Processing solution | Ionic fluid | | |
|---|---|---|---|---|---|
| | | | Melting point | Molecular weight | Addition amount |
| Example 9A | A-1 | A-1 | -16°C | 391 | 94 |
| Example 10A | B-1 | B-1 | ≤25°C | 426 | 95 |
| Example 11A | C-1 | C-1 | 6°C | 198 | 93 |

**Table 4 A**

| | Ink | Processing solution | Ejection property after long-term storage | Curl | Cockle |
|---|---|---|---|---|---|
| Example 9A | A-1 | A-1 | a | b | b |
| Example 10A | B-1 | B-1 | a | b | b |
| Example 11A | C-1 | C-1 | a | c | b |

As shown in Tables 1A to 4A, the inks containing both a colorant and an ionic liquid in Examples 1 to 11 have a superior ejection property after long-term storage.

### <Ink preparation method 1B>

A mixture of 100 g of a pigment and 500 g of ion-exchange water is ultrasonicated by using the ultrasonic homogenizer. After centrifugation by using the centrifugal separator, the supernatant liquid is removed. The operation is repeated three times, and the resulting pigment is dried under reduced pressure.

Ion-exchange water and the pigment dispersant are added to a pigment concentration of 15 % by mass in the initial pigment dispersion, and the dispersion is adjusted to pH 7.5 with an aqueous sodium hydroxide solution. The pigment dispersion is ultrasonicated by using the ultrasonic homogenizer for further dispersion of the pigment. The dispersion is centrifuged in a centrifugal separator (8,000 rpm×30 min), and the sediment (20% with respect to the total amount) is removed, to give a pigment dispersion. A solvent, a pigment dispersion, and other additives are added thereto to a predetermined ink composition and the mixture is stirred. The liquid obtained is filtered through a 5 µm filter, to give a desired liquid.

### <Ink preparation method 2B>

A mixture of 100 g of a pigment and 500 g of ion-exchange water is ultrasonicated by using the ultrasonic homogenizer. After centrifugation by using the centrifugal separator, the supernatant liquid is removed. The operation is repeated three times, and the resulting pigment is dried under reduced pressure.

100 g of the pigment thus obtained is added to a heated aqueous sulfanilic acid solution while the solution is stirred. The mixture is allowed to cool to room temperature while stirred, and 14 g of conc. nitric acid is added thereto. 10 g of an aqueous NaNO₂ solution is added to the solution, and the mixture is stirred until the reaction completes. The pigment is then desalted. Ion-exchange water is added to the surface-treated pigment thus obtained to a pigment concentration of 12 % by mass, and the solution is adjusted to pH 7.5 and dispersed in an ultrasonic homogenizer. The dispersion is centrifuged in a centrifugal separator (8,000 rpm×30 min), and the sediment (20% with respect to the total amount) is removed, to give a pigment dispersion. A solvent, a pigment dispersion, and other additives are added to a predetermined ink composition and the mixture is stirred. The liquid obtained is filtered through a 5 µm filter, to give a desired liquid.

### <Ink preparation method 3B>

A colorant and other additives are dissolved in a solvent and the mixture is stirred. The liquid obtained is filtered through a 5 µm filter, to give a desired liquid.

### (Ink A-2)

An ink is prepared according to the ink preparation method 1B.
- Composition-
- Mogul L (manufactured by Cabot): 4 % by mass
- Styrene-acrylic acid-sodium acrylate copolymer: 1 % by mass
- 1-Ethyl-3-methylimidazolium bromide (molecular weight: 191, melting point: 25°C or less): 25 % by mass
- Acetylene glycol ethylene oxide adduct: 1 % by mass
- Ion-exchange water: 69 % by mass

### (Ink B-2)

An ink is prepared according to the ink preparation method 2B.
- Composition-
- C.I. Pigment Blue 15:3: 4 % by mass
- 1-Hexylpyridinium chloride (molecular weight: 199, melting point: 25°C or less): 72 % by mass
- Acetylene glycol ethylene oxide adduct: 1 % by mass
- Ion-exchange water: 23 % by mass

### (Ink C-2)

An ink is prepared according to the ink preparation method 1B.
- Composition-
- C.I. Pigment Red 122: 5 % by mass
- Styrene-acrylic acid-sodium acrylate copolymer: 1 % by mass
- 1-Ethyl-2,3-dimethylimidazolium chloride (molecular weight: 161, melting point: 25°C or less): 10 % by mass
- Glycerol: 10 % by mass
- Acetylene glycol ethylene oxide adduct: 1 % by mass
- Water: 73 % by mass

### (Ink D-2)

An ink is prepared according to the ink preparation method 1B.
- Composition-
- C.I. Pigment Yellow 128: 4 % by mass
- Styrene-acrylic acid-sodium acrylate copolymer: 1 % by mass
- N,N-Diethyl-N-methyl-N-(2-methoxyethyl) tetrafluoroborate (molecular weight: 233, melting point: 25°C or less): 10 % by mass
- Diethylene glycol: 10 % by mass
- Acetylene glycol ethylene oxide adduct: 1 % by mass
- Water: 74 % by mass

### (Ink E-2)

An ink is prepared according to the ink preparation method 1B.
- Composition-
- C.I. Pigment Yellow 74: 4 % by mass
- Styrene-acrylic acid-sodium acrylate copolymer: 1 % by mass
- MP-200 (manufactured by TREKSTAR) (molecular weight: 422, melting point: 11°C): 6 % by mass
- 1,2-Hexanediol: 18 % by mass
- Polyoxyalkylene 2-ethylhexylether: 1 % by mass
- Ion-exchange water: 70 % by mass

### (Ink F-2)

An ink is prepared according to the ink preparation method 3B.
- Composition-
- C.I. Direct Blue 199: 4 % by mass
- 1-Butylpyridinium chloride (molecular weight: 172, melting point: 25°C or less): 77.5 % by mass
- Polyoxyalkylene stearylether: 1 % by mass
- N,N-Bis(2-hydroxyethyl)-2-aminoethanesulfonic acid: 1.2 % by mass
- Sodium hydroxide: 0.6 % by mass
- Ion-exchange water: 15.7 % by mass

### (Ink G-2)

An ink is prepared according to the ink preparation method 2B.
- Composition-
- C.I. Pigment Red 122: 4 % by mass
- 1-Butylpyridinium trifluoromethanesulfonate (molecular weight: 285, melting point: 25°C or less): 10 % by mass
- Diglycerin ethylene oxide adduct: 15 % by mass
- Polyoxyalkylene stearylether: 1 % by mass
- Ion-exchange water: 70 % by mass

### (Ink H-2)

An ink is prepared according to the ink preparation method 2B.
- Composition-
- C.I. Pigment Red 122: 4 % by mass
- 1-Ethyl-3-methylimidazolium bromide (molecular weight: 190, melting point: 25°C or less): 15 % by mass
- Diglycerin ethylene oxide adduct: 10 % by mass
- Polyoxyalkylene stearylether: 1 % by mass
- Ion-exchange water: 70 % by mass

### (Ink I-2)

An ink is prepared according to the ink preparation method 3B.
- Composition-
- Cabojet 300: 4 % by mass
- Ethylene glycol: 30 % by mass
- Acetylene glycol ethylene oxide adduct: 1 % by mass
- Ion-exchange water: 65 % by mass

### (Ink J-2)

An ink is prepared according to the ink preparation method 3B.
- Composition-
- C.I. Direct Blue 199: 4 % by mass
- Isopropyl alcohol: 75 % by mass
- Acetylene glycol ethylene oxide adduct: 1 % by mass
- N,N-Bis(2-hydroxyethyl)-2-aminoethanesulfonic acid: 1.2 % by mass
- Sodium hydroxide: 0.6 % by mass
- Ion-exchange water: 18.2 % by mass

### (Ink K-2)

An ink is prepared according to the ink preparation method 3B.
- Composition-
- C.I. Direct Blue 199: 4 % by mass
- Polyallylamine acetate salt (average molecular weight: 5000): 75 % by mass
- Acetylene glycol ethylene oxide adduct: 1 % by mass
- N,N-Bis(2-hydroxyethyl)-2-aminoethanesulfonic acid: 1.2 % by mass
- Sodium hydroxide: 0.6 % by mass
- Ion-exchange water: 18.2 % by mass

### (Processing solution A-2)

- Composition-
- Diethylene glycol: 10 % by mass
- 2-Furancarboxylic acid (pKa=2.4): 8 % by mass
- Sodium hydroxide: 0.8 % by mass
- Diglycerin ethylene oxide adduct: 8 % by mass
- Acetylene glycol ethylene oxide adduct: 1 % by mass
- Ion-exchange water: balance

### (Processing solution B-2)

- Composition-
- Diethylene glycol: 15 % by mass
- Manganese nitrate hexahydrate: 10 % by mass
- Acetylene glycol ethylene oxide adduct: 1 % by mass
- Ion-exchange water: balance

### (Processing solution C-2)

- Composition-
- Diethylene glycol: 10 % by mass
- Polyallylamine: 12 % by mass
- Acetylene glycol ethylene oxide adduct: 1 % by mass
- Ion-exchange water: balance
   For evaluation of the solubility of an ionic liquid in water, 100 g of water and 5 g of the ionic liquid are mixed, stirred and left for 1 hour in an environment of 23±0.5°C. After storage, the mixture is observed visually, and the ionic liquid completely dissolved in water is regarded to have a solubility of 5 g or more.
   As for the melting point of the ionic liquid, the ionic liquid is observed during storage a 25°C, and the ionic liquid that is in the liquid state is regarded to have a melting point of 25°C or lower. In addition, the melting point known, for example, shown in material physical data sheet, is used as it is, if it is available.

### (Examples 1B to 11B and Comparative Examples 1B to 3B)

By using each of the ink sets shown in Tables 1B and 2B, an image is formed with a 600-dpi, 1024-nozzle prototype printer head (droplet amount: 14 ng) on a FX-C² paper (manufactured by Fuji Xerox). In Examples 1B to 8B and Comparative Examples 1B and 3B, only ink is ejected on the recording medium. On the other hand, in Examples 9B to 11B, both an ink and a processing solution are ejected onto the recording medium so that the ink and the processing solution contact each other, forming an image. Printing is performed under normal environment (temperature: 23±0.5°C, humidity: 55±5% R.H). When both the ink and the processing solution are ejected, the ratio of the ink to the processing solution for forming an image of one pixel is 1:0.2 by mass.

### <<Initial ejection property>>

For evaluation of the initial ejection property, an ink is filled in an ink-jet recording device, and then, a nozzle-check pattern is printed, and the number of nozzles ejecting ink is counted.

### -Evaluation criteria-

a: Ejection from all nozzles
b: Ejection from 90% or more nozzles
c: Ejection from 80% or more and less than 90% nozzles
d: Ejection from less than 80% nozzles

### <<Ejection property after long-term storage>>

For evaluation of the ejection property after long-term storage, an ink is filled in an ink-jet recording device and left without a cap under normal environment for 15 days. Then, a nozzle-check pattern is printed, and the number of nozzles ejecting in is counted.

### -Evaluation criteria-

a: Ejection from all nozzles
b: Ejection from 90% or more nozzles
c: Ejection from 80% or more and less than 90% nozzles
d: Ejection from less than 80% nozzles

### <Evaluation results>

Evaluation results are summarized in Tables 1B to 2B.

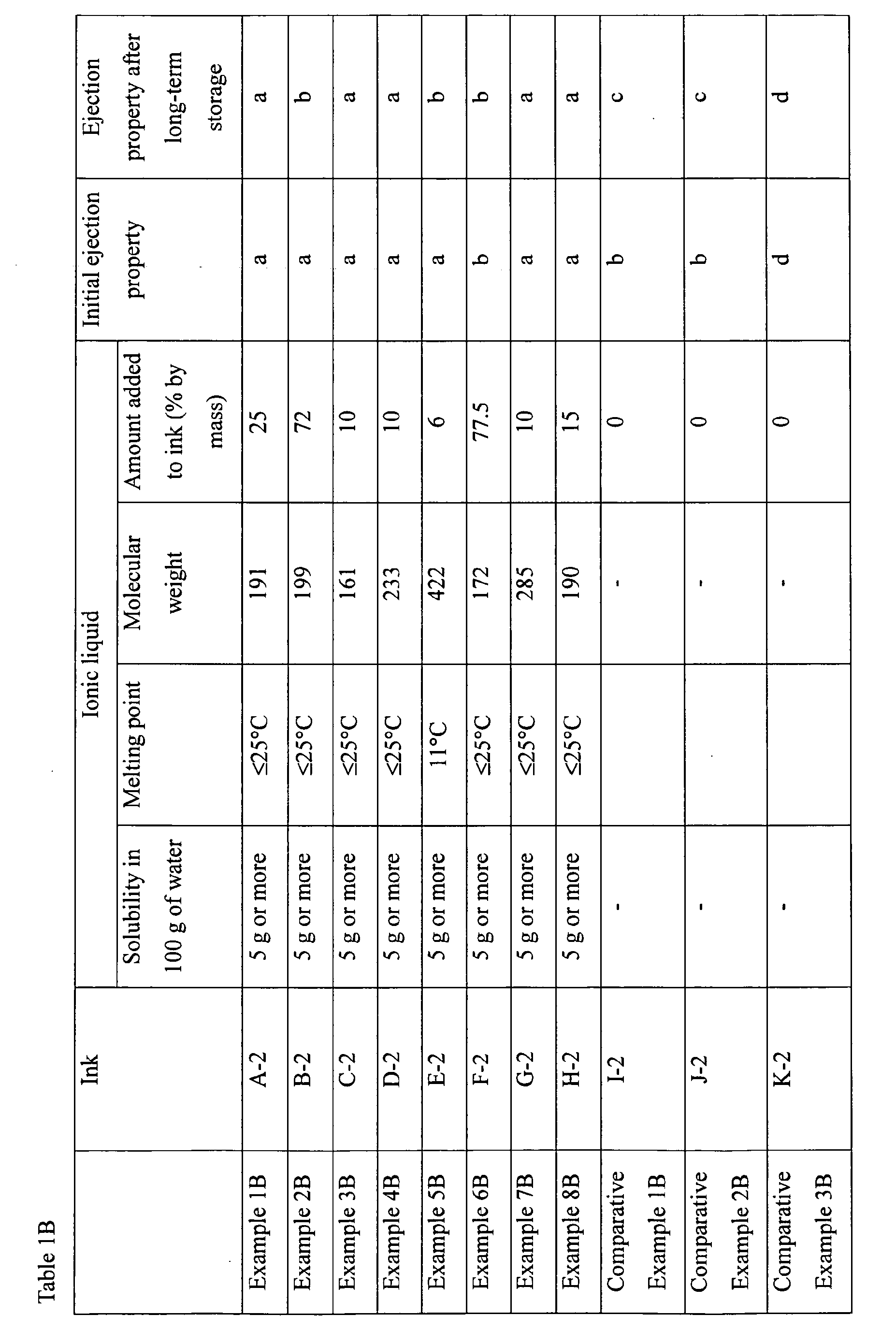

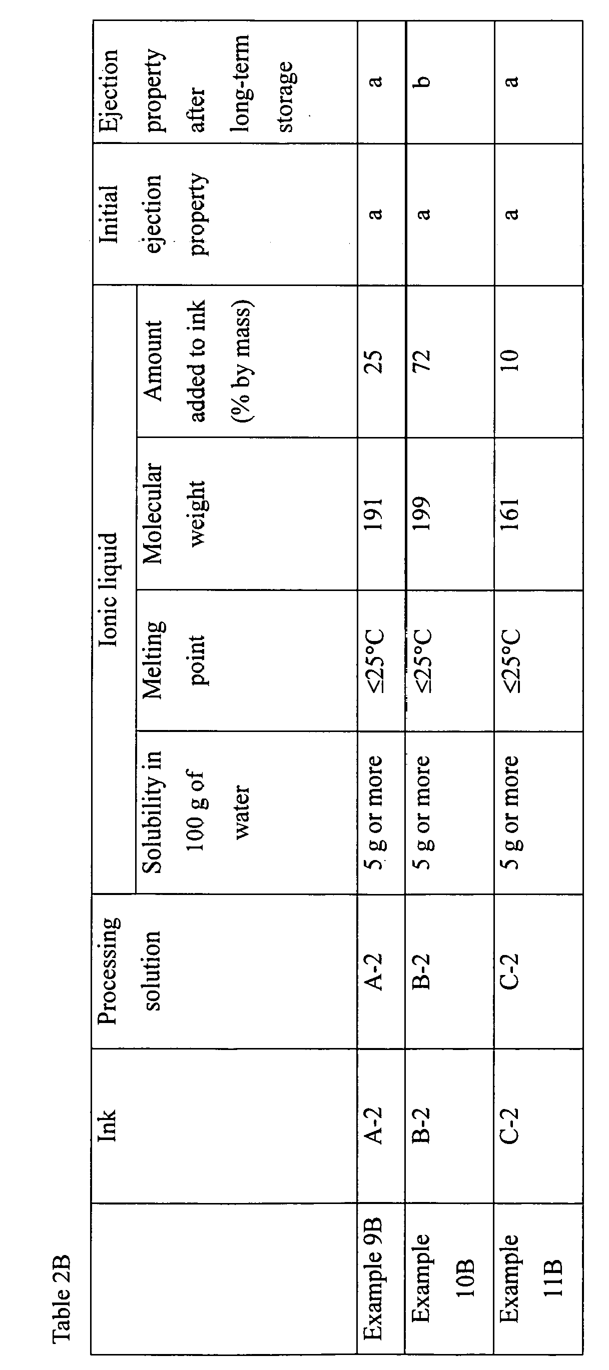

As shown in Tables 1B and 2B, the inks containing a colorant and an ionic liquid in Examples 1B to 11B have a superior ejection property after long-term storage.

### <Ink preparation method 1 C>

A mixture of 100 g of a pigment and 500 g of ion-exchange water is ultrasonicated by using the ultrasonic homogenizer. After centrifugation by using the centrifugal separator, the supernatant liquid is removed. The operation is repeated three times, and the resulting pigment is dried under reduced pressure.

Ion-exchange water and the pigment dispersant are added to a pigment concentration of 15 % by mass in the initial pigment dispersion, and the dispersion is adjusted to pH 7.5 with an aqueous sodium hydroxide solution. The pigment dispersion is ultrasonicated by using the ultrasonic homogenizer for further dispersion of the pigment. The dispersion is centrifuged in a centrifugal separator (8,000 rpm×30 min), and the sediment (20% with respect to the total amount) is removed, to give a pigment dispersion. A solvent, a pigment dispersion, and other additives are added to a predetermined ink composition and the mixture is stirred. The liquid obtained is filtered through a 5 µm filter, to give a desired liquid.

### <Ink preparation method 2C>

A mixture of 100 g of a pigment and 500 g of ion-exchange water is ultrasonicated by using the ultrasonic homogenizer. After centrifugation by using the centrifugal separator, the supernatant liquid is removed. The operation is repeated three times, and the resulting pigment is dried under reduced pressure.

100 g of the pigment thus obtained is added to a heated aqueous sulfanilic acid solution while the solution is stirred. The mixture is allowed to cool to room temperature while stirred, and 14 g of conc. nitric acid is added thereto. 10 g of an aqueous NaNO₂ solution is added to the solution, and the mixture is stirred until the reaction completes. The pigment is then desalted. Ion-exchange water is added to the surface-treated pigment thus obtained to a pigment concentration of 12 % by mass, and the solution is adjusted to pH 7.5 and dispersed in an ultrasonic homogenizer. The dispersion is centrifuged in a centrifugal separator (8,000 rpm×30 min), and the sediment (20% with respect to the total amount) is removed, to give a pigment dispersion. A solvent, a pigment dispersion, and other additives are added to a predetermined ink composition and the mixture is stirred. The liquid obtained is filtered through a 5 µm filter, to give a desired liquid.

### <Ink preparation method 3C>

A colorant and other additives are dissolved in a solvent and the mixture is stirred. The liquid obtained is filtered through a 5 µm filter, to give a desired liquid.

### (Ink A-3)

An ink is prepared according to the ink preparation method 1C.
- Composition-
- Mogul L (manufactured by Cabot): 4 % by mass
- Styrene-acrylic acid-sodium acrylate copolymer: 1 % by mass
- 1-Ethyl-3-methylimidazolium bromide (molecular weight: 191, melting point: 25°C or less):25 % by mass
- Acetylene glycol ethylene oxide adduct: 1 % by mass
- Ion-exchange water: 69 % by mass

### (Ink B-3)

An ink is prepared according to the ink preparation method 2C.
- Composition-
- C.I. Pigment Blue 15:3: 4 % by mass
- 1-Hexylpyridinium chloride (molecular weight: 199, melting point: 25°C or less): 72 % by mass
- Acetylene glycol ethylene oxide adduct: 1 % by mass
- Ion-exchange water: 23 % by mass

### (Ink C-3)

An ink is prepared according to the ink preparation method 1C.
- Composition-
- C.I. Pigment Red 122: 5 % by mass
- Styrene-acrylic acid-sodium acrylate copolymer: 1 % by mass
- 1-Ethyl-2,3-dimethylimidazolium chloride (molecular weight: 161, melting point: 25°C or less): 10 % by mass
- Glycerol: 10 % by mass
- Acetylene glycol ethylene oxide adduct: 1 % by mass
- Water: 73 % by mass

### (Ink D-3)

An ink is prepared according to the ink preparation method 1C.
- Composition-
- C.I. Pigment Yellow 128: 4 % by mass
- Styrene-acrylic acid-sodium acrylate copolymer: 1 % by mass
- N,N-Diethyl-N-methyl-N-(2-methoxyethyl) tetrafluoroborate (molecular weight: 233, Melting point: 25°C or less): 10 % by mass
- Diethylene glycol: 10 % by mass
- Acetylene glycol ethylene oxide adduct: 1 % by mass
- Water: 74 % by mass

### (Ink E-3)

An ink is prepared according to the ink preparation method 1C.
- Composition-
- C.I. Pigment Yellow 74: 4 % by mass
- Styrene-acrylic acid-sodium acrylate copolymer: 1 % by mass
- MP-200 (manufactured by TREKSTAR) (molecular weight: 422, melting point: 11°C): 6 % by mass
- 1,2-Hexanediol: 18 % by mass
- Polyoxyalkylene 2-ethylhexylether: 1 % by mass
- Ion-exchange water: 70 % by mass

### (Ink F-3)

An ink is prepared according to the ink preparation method 3C.
- Composition-
- C.I. Direct Blue 199: 4 % by mass
- 1-Butylpyridinium chloride (molecular weight: 172, melting point: 25°C or less): 77.5 % by mass
- Polyoxyalkylene stearylether: 1 % by mass
- N,N'-Bis(2-hydroxyethyl)-2-aminoethanesulfonic acid: 1.2 % by mass
- Sodium hydroxide: 0.6 % by mass
- Ion-exchange water: 15.7 % by mass

### (Ink G-3)

An ink is prepared according to the ink preparation method 2C.
- Composition-
- C.I. Pigment Red 122: 4 % by mass
- 1-Butylpyridinium trifluoromethanesulfonate (molecular weight: 285, melting point: 25°C or less): 10 % by mass
- Diglycerin ethylene oxide adduct: 15 % by mass
- Polyoxyalkylene stearylether: 1 % by mass
- Ion-exchange water: 70 % by mass

### (Ink H-3)

An ink is prepared according to the ink preparation method 2C.
- Composition-
- C.I. Pigment Red 122: 4 % by mass
- 1-Ethyl-3-methylimidazolium bromide (molecular weight: 190, melting point: 25°C or less): 15 % by mass
- Diglycerin ethylene oxide adduct: 10 % by mass
- Polyoxyalkylene stearylether: 1 % by mass
- Ion-exchange water: 70 % by mass

### (Ink I-3)

An ink is prepared according to the ink preparation method 3C.
- Composition-
- Cabojet 300: 4 % by mass
- Ethylene glycol: 30 % by mass
- Acetylene glycol ethylene oxide adduct: 1 % by mass
- Ion-exchange water: 65 % by mass

### (Ink J-3)

An ink is prepared according to the ink preparation method 3C.
- Composition-
- C.I. Direct Blue 199: 4 % by mass
- Isopropyl alcohol: 75 % by mass
- Acetylene glycol ethylene oxide adduct: 1 % by mass
- N,N'-Bis(2-hydroxyethyl)-2-aminoethanesulfonic acid: 1.2 % by mass
- Sodium hydroxide: 0.6 % by mass
- Ion-exchange water: 18.2 % by mass

### (Ink K-3)

An ink is prepared according to the ink preparation method 3C.
- Composition-
- C.I. Direct Blue 199: 4 % by mass
- Polyallylamine acetate salt (average molecular weight: 5,000): 75 % by mass
- Acetylene glycol ethylene oxide adduct: 1 % by mass
- N,N'-Bis(2-hydroxyethyl)-2-aminoethanesulfonic acid: 1.2 % by mass
- Sodium hydroxide: 0.6 % by mass
- Ion-exchange water: 18.2 % by mass

### (Processing solution A-3)

- Composition-
- Diethylene glycol: 10 % by mass
- 2-Furancarboxylic acid (pKa=2.4): 8 % by mass
- Sodium hydroxide: 0.8 % by mass
- Diglycerin ethylene oxide adduct: 8 % by mass
- Acetylene glycol ethylene oxide adduct: 1 % by mass
- Ion-exchange water: balance

### (Processing solution B-3)

- Composition-
- Diethylene glycol: 15 % by mass
- Manganese nitrate hexahydrate: 10 % by mass
- Acetylene glycol ethylene oxide adduct: 1 % by mass
- Ion-exchange water: balance

### (Processing solution C-3)

- Composition-
- Diethylene glycol: 10 % by mass
- Polyallylamine: 12 % by mass
- Acetylene glycol ethylene oxide adduct: 1 % by mass
- Ion-exchange water: balance
   For evaluation of the solubility of an ionic liquid in water, 100 g of water and 5 g of the ionic liquid are mixed, stirred and left for 1 hour in an environment of 23±0.5°C. After storage, the mixture is observed visually, and the ionic liquid completely dissolved in water is regarded to have a solubility of 5 g or more.
   As for the melting point of the ionic liquid, the ionic liquid is observed during storage at 25°C, and the ionic liquid that is in the liquid state is regarded to have a melting point of 25°C or lower. In addition, the melting point known, for example, shown in material physical data sheet, is used as it is, if it is available.

### (Examples 1C to 11C and Comparative Examples 1C to 3 C)

By using each of the ink sets shown in Tables 1C and 2C, an image is formed with a 600-dpi, 1024-nozzle prototype printer head (droplet amount: 14 ng) on a FX-C² paper (manufactured by Fuji Xerox). In Examples 1C to 8C and Comparative Examples 1C to 3C, only ink is ejected on the recording medium. On the other hand, in Examples 9C to 11C, both an ink and a processing solution are ejected onto the recording medium so that the ink and the processing solution contact each other, forming an image. Printing is performed under normal environment (temperature: 23±0.5°C, humidity: 55±5% R.H). When both the ink and the processing solution are ejected, the ratio of the ink to the processing solution for forming an image of one pixel is 1:0.2 by mass.

### <<Initial ejection property>>

For evaluation of the initial ejection property, an ink was filled in an ink-jet recording device, and then, a nozzle-check pattern was printed, and the number of nozzles ejecting in was counted.

### -Evaluation criteria-

a: Ejection from all nozzles
b: Ejection from 90% or more nozzles
c: Ejection from 80% or more and less than 90% nozzles
d: Ejection from less than 80% nozzles

### <<Ejection property after long-term storage>>

For evaluation of the ejection property after long-term storage, an ink is filled in an ink-jet recording device and left without a cap under normal environment for 15 days. Then, a nozzle-check pattern is printed, and the number of nozzles ejecting in is counted.

### -Evaluation criteria-

a: Ejection from all nozzles
b: Ejection from 90% or more nozzles
c: Ejection from 80% or more and less than 90% nozzles
d: Ejection from less than 80% nozzles

### <Evaluation results>

Evaluation results are summarized in Tables 1 C to 2C.

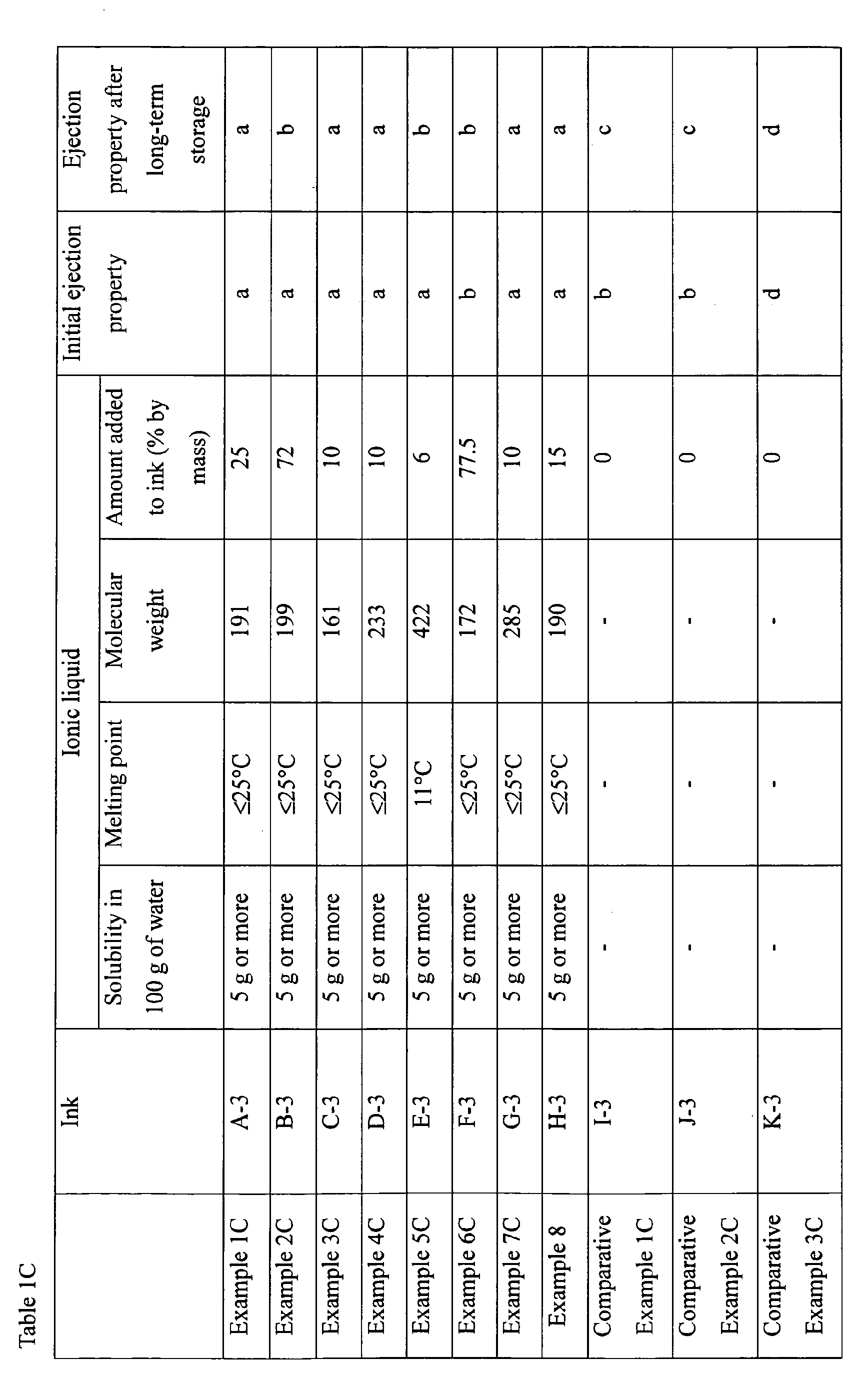

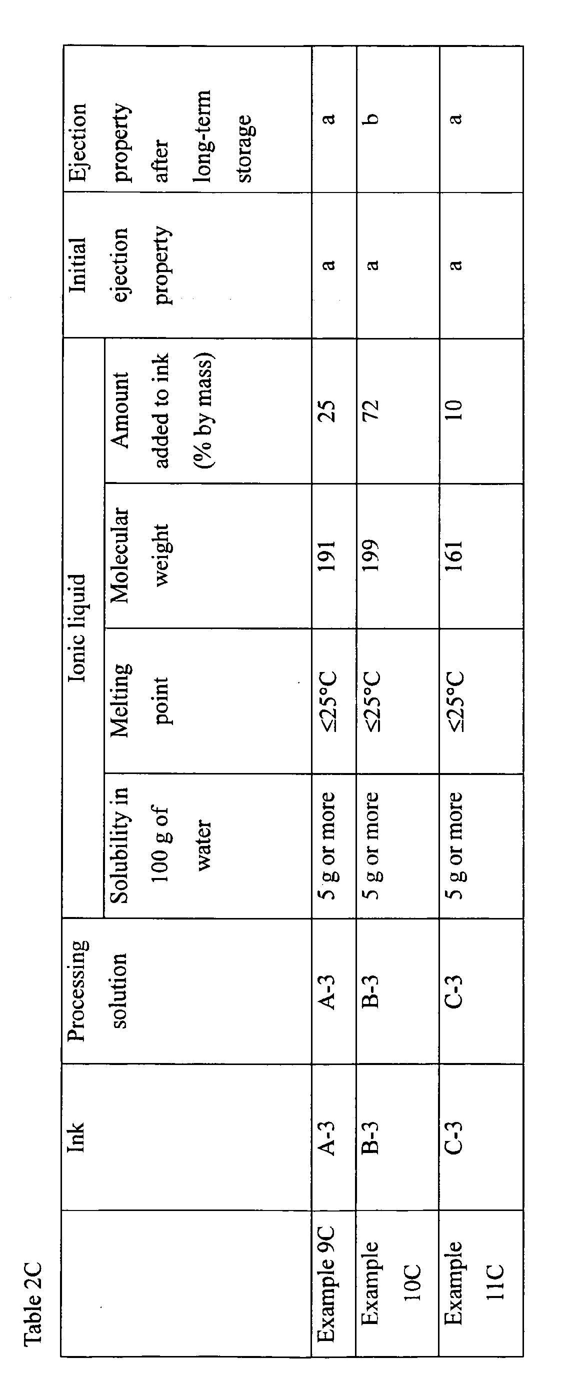

As shown in Tables 1C to 2C, the inks containing a colorant and an ionic liquid in Examples 1 to 11 have a superior ejection property after long-term storage.

### <Ink preparation method 1D>

A mixture of 100 g of a pigment and 500 g of water is ultrasonicated by using the ultrasonic homogenizer. After centrifugation by using the centrifugal separator, the supernatant liquid is removed. The operation is repeated three times, and the resulting pigment is dried under reduced pressure.

A mixture of the pigment and a pigment dispersant at a mass ratio of 1:1 is blended in a roll mill, and predetermined amounts of ionic liquid, organic solvent, and other additives are added thereto, and the mixture is further dispersed in a bead mill for 2 hours, to give a desired ink.

### <Ink preparation method 2 D>

A colorant and other additives are dissolved in a solvent and the mixture is stirred. The liquid obtained is filtered through a 5 µm filter, to give a desired liquid.

### (Ink A-4)

An ink is prepared according to the ink preparation method 1D.
- Composition-
- Mogul L (manufactured by Cabot): 5 % by mass
- Benzyl methacrylate-stearyl acrylate copolymer: 5 % by mass
- 1-Ethyl-3-methylimidazolium bis(trifluoromethanesulfonyl)imide (molecular weight: 391, melting point: -16°C): 40 % by mass
- Isopar M: 50 % by mass

### (Ink B-4)

An ink is prepared according to the ink preparation method 1D.
- Composition-
- C.I. Pigment Blue 15:3: 5 % by mass
- Benzyl methacrylate -lauryl acrylate copolymer: 5 % by mass
- N,N-Diethyl-N-methyl-N-(2-methoxyethyl)ammonium bis(trifluoromethanesulfonyl)imide (molecular weight: 426, melting point: 25°C or less): 20 % by mass
- Diethylene glycol monobutylether: 40 % by mass
- Isopar M: 30 % by mass

### (Ink C-4)

An ink is prepared according to the ink preparation method 1D.
- Composition-
- C.I. Pigment Red 122: 5 % by mass
- Styrene-isostearyl acrylate copolymer: 5 % by mass
- 1-Ethyl-3-methylimidazolium tetrafluoroborate (molecular weight: 198, melting point: 6°C): 50 % by mass
- 1,2-Hexanediol: 20 % by mass
- Isopar H: 20 % by mass

### (Ink D-4)

An ink is prepared according to the ink preparation method 1D.
- Composition-
- C.I. Pigment Yellow 128: 4 % by mass
- Stearyl acrylate-butyl acrylate copolymer: 4 % by mass
- 1-Butylpyridinium chloride (molecular weight: 172, melting point: 25°C or less): 77.5 % by mass
- Propylene glycol monobutylether: 14.5 % by mass

### (Ink E-4)

An ink is prepared according to the ink preparation method 1D.
- Composition-
- C.I. Pigment Yellow 74: 4 % by mass
- Benzyl methacrylate-stearyl acrylate copolymer: 4 % by mass
- MP-200 (manufactured by TREKSTAR) (molecular weight: 422, melting point: 11°C): 7 % by mass
- Diethylene glycol monobutylether: 85 % by mass

### (Ink F-4)

An ink is prepared according to the ink preparation method 2D.
- Composition-
- C.I. Solvent Blue 25: 2.5 % by mass
- N,N-Diethyl-N-methyl-N-(2-methoxyethyl)ammonium tetrafluoroborate (molecular weight: 233, melting point: 25°C or less):60 % by mass
- Isopropyl alcohol: 37.5 % by mass

### (Ink G-4)

An ink is prepared according to the ink preparation method 1D.
- Composition-
- C.I. Pigment Red 122: 5 % by mass
- Styrene-stearyl methacrylate copolymer: 5 % by mass
- Trimethyl-hexylammonium ammonium bis(trifluoromethanesulfonyl)imide (molecular weight: 424, melting point: 34.5°C): 30 % by mass
- Diglycerin ethylene oxide adduct (SC-E450): 20 % by mass
- Isopar M: 40 % by mass

### (Ink H-4)

An ink is prepared according to the ink preparation method 1D.
- Composition-
- C.I. Pigment Red 122: 4 % by mass
- Styrene-stearyl methacrylate copolymer: 4 % by mass
- 1-Octadecyl-3-methylimidazolium bis(trifluoromethanesulfonyl)imide (molecular weight: 616, melting point: 25°C or less): 12 % by mass
- Isopar H: 80 % by mass

### (Ink I-4)

An ink is prepared according to the ink preparation method 1D.
- Composition-
- Mogul L (manufactured by Cabot): 5 % by mass
- Benzyl methacrylate-stearyl acrylate copolymer: 5 % by mass
- Isopar M: 90 % by mass

### (Ink J-4)

An ink is prepared according to the ink preparation method 1D.
- Composition-
- C.I. Pigment Blue 15:3: 5 % by mass
- Benzyl methacrylate-lauryl acrylate copolymer: 5 % by mass
- Diethylene glycol monobutylether: 50 % by mass
- Isopropyl alcohol: 40 % by mass

### (Processing solution A-4)

- Composition-
- Diethylene glycol: 10 % by mass
- 2-Furancarboxylic acid: 8 % by mass
- Sodium hydroxide: 0.8 % by mass
- Diglycerin ethylene oxide adduct: 8 % by mass
- Acetylene glycol ethylene oxide adduct: 1 % by mass
- Ion-exchange water: balance

As for the melting point of the ionic liquid, the ionic liquid was observed visually during storage a 25°C, and the ionic liquid that was in the liquid state was regarded to have a melting point of 25µ or lower. In addition, the melting point known, for example, shown in material physical data sheet, was used as it is, if it is available.

### (Examples 1D to 10D and Comparative Examples 1D to 2D)

By using each of the ink sets shown in Tables 1D and 2D, an image was formed with a 600-dpi, 1024-nozzle prototype printer head (droplet amount: 14 ng) on a FX-C² paper (manufactured by Fuji Xerox). In Examples 1D to 8D and Comparative Examples 1D and 2D, only ink was ejected on the recording medium. On the other hand, in Examples 9D to 10D, both an ink and a processing solution were ejected onto the recording medium so that the ink and the processing solution contact each other, forming an image. Printing was performed under normal environment (temperature: 23±0.5°C, humidity: 55±5% R.H). When both the ink and the processing solution were ejected, the ratio of the ink to the processing solution for forming an image of one pixel was 1:0.2 by mass.

### <<Accuracy of printed image position>>

The accuracy of printed image position was determined as follows: An ink was filled in an ink-jet recording device, and two droplets of the ink were ejected on the same pixel. The centers of inks and the ink intercentral distance were determined by analyzing the images printed on the recording medium.

### -Evaluation criteria-

a: Ink intercentral distance of less than 5 µm
b: Ink intercentral distance of 5 µm or more and less than 10 µm
c: Ink intercentral distance of 10 µm or more and less than 20 µm
d: Ink intercentral distance of 20 µm or more

### <Evaluation results>

Evaluation results are summarized in Tables 1D and 2D.

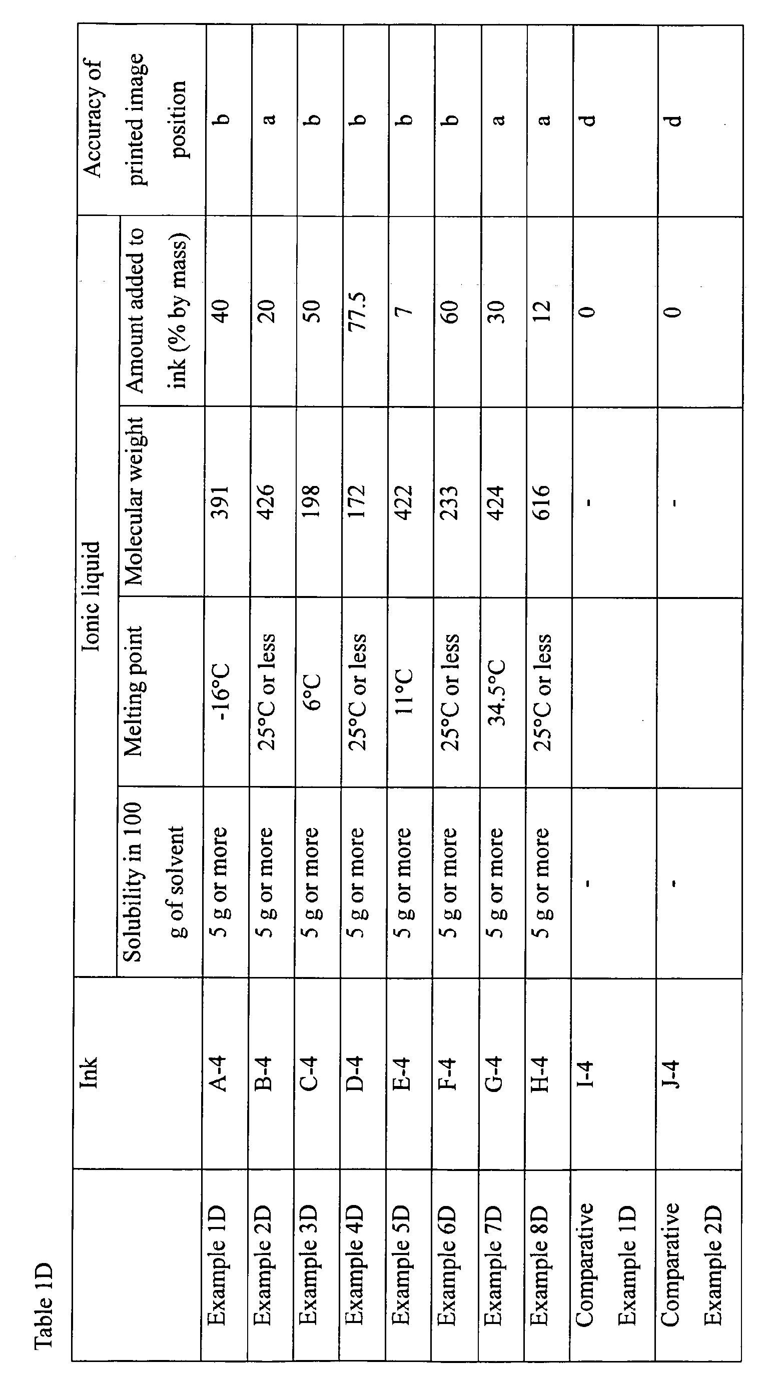

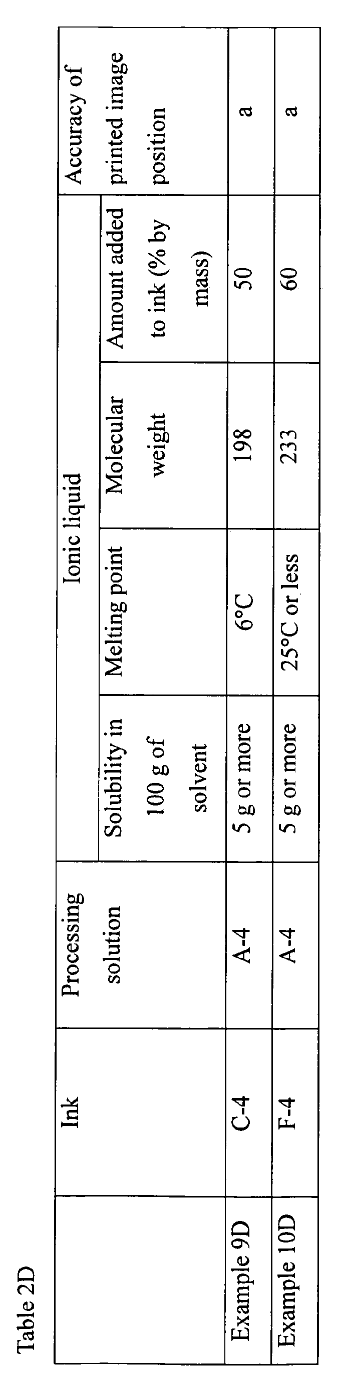

As shown in Table 1D to 2D, the inks containing a colorant and an ionic liquid in Examples 1D to 10D is superior in the accuracy of printed image position.

The ink according to the invention is resistant to the change in ink properties during long-term storage because of the properties of the ionic liquid in the ink and superior in particular in the ejection property after long-term storage. Thus, when used in the inkjet process, the ink is superior in the ejection property after long-term storage, prevents the curl and cockle of the recording medium such as paper after printing, and provides a favorable pattern or image consistently because of the stabilized ink ejection property.

In addition, the ink according to the invention has a smaller change in ink properties during storage for an extended period of time because of the properties of the ionic liquid contained in ink, and as a result, is superior in particular in the initial ejection property and also in the ejection property after storage for an extended period of time, giving a favorable pattern or image consistently.

The invention provides an ink resistant to the change in properties during long-term storage, and as a result, gives a favorable pattern or image consistently especially by using a processing solution superior in the ejection property after long-term storage, an ink set using the processing solution, a recording medium, a recording method, an ink tank, and a recording device.

The invention provides an ink, an ink set, a recording method, an ink tank, and, a recording device superior in the ejection property and the accuracy of printed image position.

## Claims

1. An ink comprising at least a colorant and an ionic liquid.

2. The ink of Claim 1, further comprising water.

3. The ink of Claim 1, further comprising an organic solvent.

4. A processing solution for aggregating or thickening an ink containing at least a colorant, the processing solution comprising at least an ionic liquid.

5. The ink of any one of Claims 1 to 3, wherein the ink is an ink-jet ink for use in an inkjet process.

6. The processing solution of Claim 4, wherein the ink is an ink-jet ink for use in an inkjet process.

7. The ink of any one of Claims 1 to 3, wherein the ionic liquid is a compound consisting of an organic cation and an anion and having a melting point of 25°C or less.

8. The processing solution of Claim 4, wherein the ionic liquid is a compound consisting of an organic cation and an anion and having a melting point of 25°C or less.

9. The ink of Claim 7, wherein the organic cation of the ionic liquid is at least one cation selected from the group consisting of imidazolium, ammonium, pyridinium, and piperidinium cations.

10. The ink of Claim 7, wherein the anion of the ionic liquid is at least one anion selected from the group consisting of bromide, chloride, lactate, hexafluorophosphate, tetrafluoroborate, bis(trifluoromethanesulfonyl)imide, and trifluoromethanesulfonate anions.

11. The ink of Claim 7, wherein the colorant is at least one colorant selected from a dye, a pigment, and a colorant of colored particles.

12. The ink of Claim 11, wherein the pigment is at least one pigment selected from self-dispersing pigments, pigments dispersed with a polymer dispersant, and microcapsule pigments.

13. An ink set comprising the ink of Claim 7 and a processing solution containing at least a flocculant.

14. The ink set of Claim 13, wherein the flocculant is at least one compound selected from the group consisting of organic acids having a pKa of 4.5 or less, inorganic electrolytes, and organic amine compounds.

15. A recorded medium carrying a pattern or image formed by using the ink of Claim 7.

16. An ink ejection method of ejecting an ink, wherein the ink is the ink of Claim 7.

17. A recording method of applying the ink of Claim 7 onto a recording medium by an inkjet process.

18. A recording method using the ink set of Claim 13, comprising applying the ink and the processing solution on a recording medium so that the ink and the processing solution contact each other to form a pattern or image.

19. The recording method of Claim 18, wherein the ink and the processing solution stored in the ink set are applied on the recording medium by the inkjet process.

20. The recording method of Claim 18, wherein the mass ratio of an amount of the ink to an amount of the processing solution applied on the recording medium for forming an image of one pixel is in the range of 1:20 to 20:1.

21. An ink tank storing the ink of Claim 1.

22. An ink tank storing the ink set of Claim 13.

23. An ink-ejecting device comprising an ink-ejector for ejecting the ink of Claim 1.

24. A recording device comprising the ink tank of Claim 21 and an ink applicator for applying the ink supplied from the ink tank, onto a recording medium.

25. A recording device comprising the ink tank of Claim 21 and an ink applicator for applying the ink supplied from the ink tank, onto a recording medium, wherein at least part of a pattern or image is formed by using the ink and the processing solution.

26. The recording device of Claim 24, wherein the ink applicator uses an ink-jet process.

27. The recording device of Claim 26, wherein droplets of the ink are applied on the recording medium in an amount of 0.01ng to 25ng per droplet.

28. The recording device of Claim 26, wherein a mass ratio of an amount of the ink to an amount of the processing solution applied onto the recording medium for forming an image of one pixel is in the range of 1:20 to 20:1.

29. The recording device of Claim 24, further comprising heating unit for heating at least part of the ink tank or the ink applicator.
